# EUROPEAN PATENT APPLICATION

(11) **EP 1 626 350 A1**
(43) Date of publication of application: **15.02.2006**
(21) Application number: 04733641.7
(22) Date of filing: 18.05.2004
(51) Int. Cl.: G06F 17/30

(54) **CONTENT DELIVERY DEVICE AND CONTENT RECEPTION DEVICE**

(30) Priority: 19.05.2003 JP 2003140651
(71) Applicant: MATSUSHITA ELECTRIC INDUSTRIAL CO., LTD., Kadoma-shi, Osaka 571-8501 (JP)
(72) Inventor: TANIGUCHI, Koji, Osaka 576-0054 (JP); TADA, Hiroyuki, Kangawa 214-0022 (JP); SATO, Junichi, Tokyo 195-0053 (JP); YAMAGUCHI, Takao, Osaka 572-0005 (JP)
(74) Representative: Grünecker, Kinkeldey, Stockmair & Schwanhäusser Anwaltssozietät
(86) International application number: PCT/JP2004/007040
(87) International publication number: WO 2004/102425

(57) **Abstract**

With regard to content assigned correspondence to location information, the present invention enables content to be searched efficiently by distributing a content list in which content metadata is organized hierarchically based on location information from a server to a terminal, and having information of content limited to a user' s region of interest generated in the terminal.

## Description

### Technical Field

The present invention relates to a content distribution apparatus and content receiving apparatus that transmit and receive information relating to content that has location information existing in a network.

### Background Art

With the increasing popularity of mobile terminals that have a GPS (Global Positioning System) function in recent years, there is a growing demand for location information services that offer information relating to a user's present locality. In addition, mobile terminals incorporating a terrestrial digital broadcast reception function are also being developed. Against this backdrop, it is easy to envisage the development in the near future of mobile terminals equipped with a GPS-based location information acquisition function, a terrestrial digital broadcast reception function, and an internet access function using communication. The widespread use of such mobile terminals will make it possible to provide more useful location information services than heretofore.

A known general location information service that has been available for some time is a service whereby location information is reported from a GPS-equipped mobile terminal to a server, information on the present locality of this mobile terminal is retrieved on the server side, and the retrieved results are sent back to the mobile terminal.

A conventional example of a location information service is a method shown in Unexamined Japanese Patent Publication No. HEI 11-98568 (Japanese Patent Publication No. 3300262), "Mobile Communication System and Mobile Terminal." In this method, in an environment in which URL list servers are distributed that provide a URL list of content within each zone for zones centered on a wireless base station, a mobile terminal receives a zone identification signal received from a wireless base station, decides the URL of the URL list server corresponding to the zone in which the mobile terminal itself is currently located with reference to a table in which correspondence relationship between the URL list server and the zone identification signal is written, and acquires a local URL list from that URL list server.

Also, in an area limited notification information provision method shown in Unexamined Japanese Patent Publication No. 2002-132820, "Area Limited Notification Information Provision Method," the range of information recipients to which notification information is distributed is divided into units set in advance geographically and temporally, a geographical and temporal distribution unit for distributing advertisements is determined for each notification information, distribution of all notification information for which distribution is wished is scheduled for each distribution unit, and notification information is distributed in push method to information recipients within a distribution unit.

Furthermore, in a user-specific information provision service method shown in Unexamined Japanese Patent Publication No. 2000-333258, "User-Specific Information Provision Service Method and System," an information menu center that creates an information menu to be provided to users based on user contract information and visitor information is deployed within a mobile network, and an information menu is transmitted at the time of power supply, or at the time of local registration performed between a mobile device and the mobile network at the time of transition to a visited area.

Moreover, in a content distribution method shown in Unexamined Japanese Patent Publication No. 2002-334095, "Content Distribution Method, Content Distribution System, and Content Distribution Facility," menu data in which correspondence between an attribute code showing the content distribution target region and a content address is distributed by broadcasting, and a terminal references an attribute code of received menu data, extracts an address of content corresponding to the terminal's current location, and acquires that content.

However, a problem with the above-described methods is that content is classified on a previously set area-by-area basis and information relating to content included in the area to which a terminal belongs is provided to that terminal, and these methods do not provide peripheral information included in a user's region of interest, set centered on the current location of the user terminal.

### Disclosure of Invention

It is an object of the present invention to provide a content distribution environment in which, with regard to content assigned correspondence to a geographical point or region, it is possible to efficiently extract information of content limited to a user's point of interest or region of interest, based on location information.

The present invention collects meta-information content from a server that has location-dependent content, which is content assigned correspondence to geographical location information, and information content including geographical location information indicating the geographical location of location-dependent content and network location information, which is the link destination of location-dependent content, and then divides a geographical distribution region of location-dependent content into mesh-shaped areas based on geographical location information of meta-information content, and generates a content information block in which geographical location information is added to content information including network location information as an index, and furthermore, generates an area information block in which area location information defining the location and shape of an area is added to a collection of content information blocks on an area-by-area basis as an index, and generates list content that has a structure in which area information blocks are listed.

By this means it is possible, with regard to content assigned correspondence to location information, to distribute to a terminal a content list in which content metadata is organized hierarchically based on location information. As a result, a user can be provided with a content distribution environment in which it is possible to search for content efficiently according to geographical location conditions.

### Brief Description of Drawings

FIG. 1 is a system configuration diagram of a content adaptive distribution system according to an embodiment of the present invention;
FIG. 2 is a block diagram of a content broadcasting server according to this embodiment;
FIG. 3 is a block diagram of a content receiving terminal according to this embodiment;
FIG. 4 is a drawing showing an example of a content distribution region and geographical content areas according to this embodiment;
FIG. 5 is a first drawing showing the relationship between geographical content areas and a region of interest (ROI) according to this embodiment;
FIG. 6 is a drawing showing example of local region list content according to this embodiment;
FIG. 7 is a first drawing showing an example of content information according to this embodiment;
FIG. 8 is a second drawing showing an example of content information according to this embodiment;
FIG. 9 is a drawing showing the structure of list content according to this embodiment;
FIG. 10 is a first drawing showing the structure of list content written in CLML according to this embodiment;
FIG. 11 is a drawing showing an example of a mesh area definition description according to this embodiment;
FIG. 12 is a drawing showing the structure of an area information block written in CLML according to this embodiment;
FIG. 13 is a drawing showing an example of the structure of list content including area location information written in CLML according to this embodiment;
FIG. 14 is a drawing showing an example of the structure of list content that does not have a mesh area definition written in CLML according to this embodiment;
FIG. 15 is a drawing showing the structure of a content information block written in CLML according to this embodiment;
FIG. 16 is a first drawing showing an example of a content information block written in CLML according to this embodiment;
FIG. 17 is a second drawing showing an example of a content information block written in CLML according to this embodiment;
FIG. 18 is a third drawing showing an example of a content information block written in CLML according to this embodiment;
FIG. 19 is a fourth drawing showing an example of a content information block written in CLML according to this embodiment;
FIG. 20 is a second drawing showing the structure of list content written in CLML according to this embodiment;
FIG. 21 is a third drawing showing the structure of list content written in CLML according to this embodiment;
FIG. 22 is a drawing showing an example of the distribution of location-dependent content in geographical space according to this embodiment;
FIG. 23 is a second drawing showing the relationship between geographical content areas and a region of interest (ROI) according to this embodiment;
FIG. 24 is a drawing explaining determination of overlapping of a region of interest (ROI) and regions of content (ROC) according to this embodiment;
FIG. 25 is a drawing explaining determination of overlapping of a region of interest (ROI) and points of content (POC) according to this embodiment;
FIG. 26 is a drawing showing an example of the arrangement of geographical content areas and location-dependent content according to this embodiment;
FIG. 27 is a drawing showing content information block selection conditions according to this embodiment;
FIG. 28 is a first drawing showing an example of list content written in CLML and HTML according to this embodiment;
FIG. 29 is a second drawing showing an example of list content written in CLML and HTML according to this embodiment;
FIG. 30 is a third drawing showing an example of list content written in CLML and HTML according to this embodiment;
FIG. 31 is a first drawing showing an example of HTML content generated from list content according to this embodiment;
FIG. 32 is a second drawing showing an example of HTML content generated from list content according to this embodiment;
FIG. 33 is a third drawing showing an example of HTML content generated from list content according to this embodiment;
FIG. 34 is a first drawing showing an example of list content written in CLML according to this embodiment;
FIG. 35 is a second drawing showing an example of list content written in CLML according to this embodiment;
FIG. 36 is a third drawing showing an example of list content written in CLML according to this embodiment;
FIG. 37 is a fourth drawing showing an example of list content written in CLML according to this embodiment;
FIG. 38 is a drawing showing an example of content information generated from list content according to this embodiment;
FIG. 39 is a flowchart showing the meta-information content collection processing procedure of a content broadcasting server according to this embodiment;
FIG. 40 is a flowchart showing the list content generation processing procedure of a content broadcasting server according to this embodiment;
FIG. 41 is a flowchart showing the list content distribution processing procedure of a content broadcasting server according to this embodiment;
FIG. 42 is a flowchart showing the message processing procedure of a content receiving terminal according to this embodiment;
FIG. 43 is a flowchart showing the content acquisition processing procedure of a content receiving terminal according to this embodiment;
FIG. 44 is a flowchart showing the data broadcast processing procedure of a content receiving terminal according to this embodiment;
FIG. 45 is a flowchart showing the general HTTP processing procedure of a content receiving terminal according to this embodiment;
FIG. 46 is a flowchart showing the unit HTTP processing procedure of a content receiving terminal according to this embodiment;
FIG. 47 is a flowchart showing the adaptive HTTP processing procedure of a content receiving terminal according to this embodiment;
FIG. 48 is a flowchart showing the location adaptive content processing procedure of a content receiving terminal according to this embodiment; and
FIG. 49 is a flowchart showing the location information processing procedure of a content receiving terminal according to this embodiment.

### Best Mode for Carrying out the Invention

With reference now to the accompanying drawings, an embodiment of the present invention will be explained in detail below.

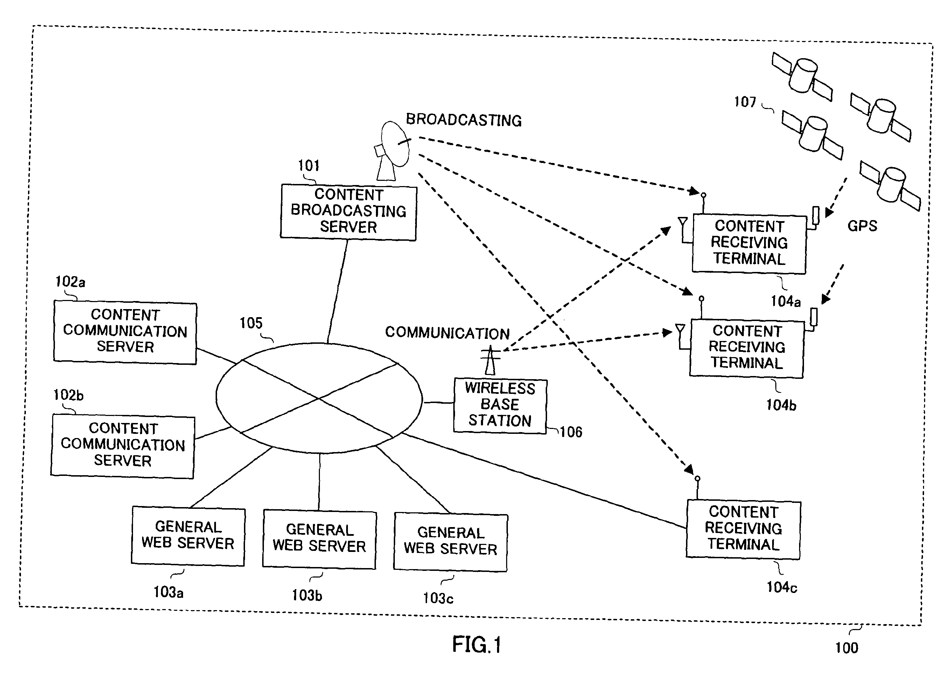

First, the configuration of a content adaptive distribution system according to this embodiment will be described using FIG. 1. In this content adaptive distribution system, a server provides wide-area information relating to location-dependent content (content that has location information) to a terminal, and the terminal performs location-dependent content searching and display. FIG. 1 is a system configuration diagram of a content adaptive distribution system according to this embodiment.

Content adaptive distribution system 100 of this embodiment includes a content broadcasting server 101, content communication servers 102 (102a and 102b), general Web servers 103 (103a through 103c), content receiving terminals 104 (104a through 104c), a communication network 105, a wireless base station 106, and GPS satellites 107.

Content broadcasting server 101 is a broadcasting station that can perform general digital broadcasting to terminals that have a broadcast reception function, and at the same time perform content distribution by means of carousel data broadcasting. Any broadcasting mode may be used by content broadcasting server 101, such as satellite broadcasting by a broadcasting satellite or communication satellite, terrestrial digital broadcasting, or internet broadcasting. In this embodiment, content broadcasting server 101 distributes information relating to location-dependent content (by means of terrestrial digital broadcasting, for example). Also, in this embodiment, content broadcasting server 101 is assumed to be connected to communication network 105.

Content communication servers 102 distribute content to terminals that have a communication function using Internet protocol. A Web server (HTTP server) on the internet can be mentioned as a concrete example of a content communication server 102. In this embodiment, the number of content communication servers 102 is unlimited. Content communication servers 102 fulfill a role of distributing information relating to location-dependent content in the same way as content broadcasting server 101.

General Web servers 103 distribute content to terminals that have a communication function using Internet protocol in the same way as content communication servers 102. Content held by general Web servers 103 may be of any kind, but in this embodiment, it is assumed to be location-dependent content in particular. Here, location-dependent content refers to content that has a relationship with geographical location information (specifically, latitude and longitude coordinate values), or content that has a geographical distribution range. Content of a store that has a latitude and longitude or address, and content such as traffic information, weather information, and advertising with a limited distribution region, are examples of location-dependent content.

Content receiving terminals 104 are client terminals that have a function for receiving digital broadcasts and a function for accessing a communication network. Content receiving terminals 104 receive content from content broadcasting server 101, content communication servers 102, and general Web servers 103. When a content receiving terminal 104 is a mobile terminal, that content receiving terminal 104 is also assumed to have a function for acquiring location information by means of GPS (Global Positioning System) or the like. A content receiving terminal 104 may be any kind of terminal, such as a PDA (Personal Digital Assistant) or car navigation system.

Communication network 105 is a network allowing mutual communication between servers (content broadcasting server 101, content communication servers 102, general Web servers 103) and content receiving terminals 104, and may be any kind of network such as the internet, a WAN (Wide Area Network), a LAN (Local Area Network), a wireless network, or a network in which these are combined.

Wireless base station 106 relays communications between communication network 105 and mobile content receiving terminals 104.

GPS satellites 107 are satellites used for navigation (positioning) for ships, airplanes, automobiles, and so forth. A mobile content receiving terminal 104 receives radio waves from a plurality of GPS satellites 107, and calculates latitude and longitude coordinate values of the terminal's current location.

Next, data transmitted and received in content adaptive distribution system 100 will be described. Content adaptive distribution system 100 can transmit and receive any general content existing on the internet, but handles in particular location-dependent content and its metadata, list content, and local region list content.

Location-dependent content is content that has geographical location information or a geographical distribution range. Examples of such location-dependent content are content including contents relating to a store, facility, or the like that has a latitude and longitude or address, and content such as advertising with a limited distribution region. In this embodiment, HTML content assigned correspondence to latitude and longitude coordinate values is taken to be location-dependent content. However, location-dependent content may also be content written in a description language other than HTML, MPEG or similar moving image content, or stream data being distributed.

This location-dependent content is held in general Web servers 103, and can be freely accessed by any HTTP client terminal. That is to say, location-dependent content has a URL (Uniform Resource Locator). Hereinafter, information stipulating a point or region within geographical space by means of latitude and longitude coordinate values, an address, or the like, is referred to as geographical location information, and a URL is defined as information that indicates the location of content in communication network 105, and is referred to as network location information. That is to say, location-dependent content has geographical location information and network location information.

A general Web server 103 that has location-dependent content has metadata as data associated with location-dependent content. Metadata is data for using data, and includes, for example, the data format, coding specifications, the actual content whereabouts and access method, abstract of content, right and usage conditions, and so forth. Metadata is created separately from actual content, and a terminal for viewing content references metadata before accessing actual content.

In this embodiment, it is assumed that location-dependent content metadata is written in an XML based description language, and includes at least geographical location information and network location information for actual content. When the distribution range of location-dependent content is stipulated, the distribution range is also included in the metadata. Other items that can be included in metadata are content title or category, text giving an overview, ContactAddress, update date and time, and so forth. In this embodiment, unless stated otherwise, "metadata" is hereinafter used to mean "location-dependent content metadata." Also, "content in which location-dependent content metadata is compiled" is referred to as "meta-information content." In addition, information extracted from meta-information content is referred to as "content information."

List content is content in which a list of location-dependent content reference destinations (URLs) is written. In this embodiment, list content is written in an XML based description language and has a format whereby content information for location-dependent content is classified by geographical location information. That is to say, by retrieving geographical location information written in list content, it is possible to reference content information for location-dependent content related to that geographical location information. In this embodiment, content broadcasting server 101 collects meta-information content and generates list content from that group of meta-information content.

A content receiving terminal 104 generates local region list content from list content. Here, a geographical space in which location-dependent content included in list content is distributed is referred to as a content distribution region. In contrast, a space limited to a specific point, such as the current locality of a mobile content receiving terminal 104, for example, is referred to as a region of interest (ROI). Local region list content is content in which a list of reference destinations (URLs) of location-dependent content included in a region of interest is written.

Hereinafter, a representative point of a region of interest (ROI) is referred to as a point of interest (POI). When a region of interest (ROI) is a circular region, the center of the circular region is a POI, and in this embodiment, a POI corresponds to the current location of a content receiving terminal.

Content adaptive distribution system 100 handles the kind of data described above. Specifically, a general Web server 103 holds location-dependent content and meta-information content (that is, metadata of that location-dependent content), content broadcasting server 101 (or a content communication server 102) holds list content, and a content receiving terminal 104 generates local region list content from list content.

Next, a detailed description will be given concerning content broadcasting server 101 and a content receiving terminal 104 in content adaptive distribution system shown in FIG. 1. In this embodiment, since content communication servers 102 and general Web servers 103 are quite ordinary Web servers (HTTP servers), descriptions thereof will be omitted. Similarly, wireless base station 106 and GPS satellites 107 are ordinary communication facilities, and descriptions thereof will also be omitted.

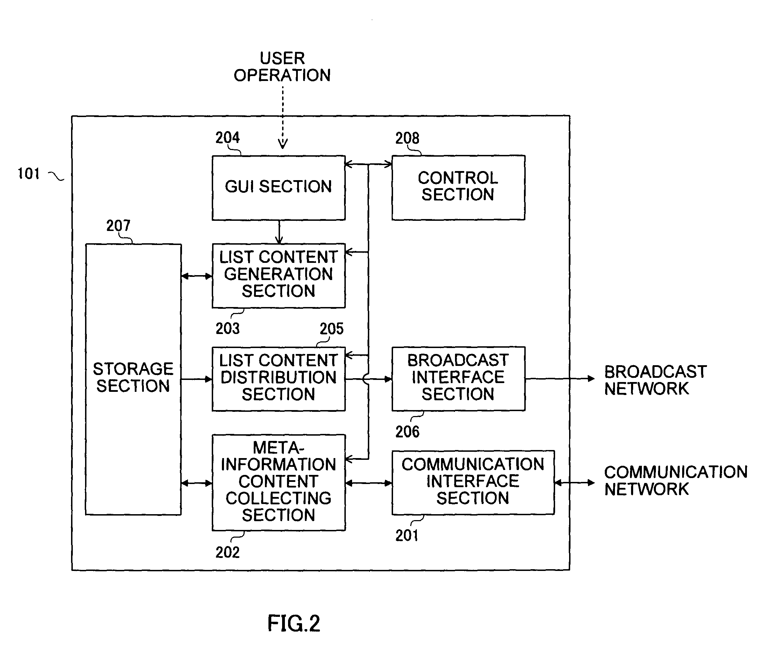

First, the internal configuration of content broadcasting server 101 will be described with reference to FIG. 2. Content broadcasting server 101 collects Web content meta-information content from general Web servers 103 via communication network 105, generates list content from the collected meta-information content, and distributes list content by broadcasting.

A communication interface section 201 is a communication section for performing data transmission/reception to/from other communication apparatuses via communication network 105.

A meta-information content collecting section 202 collects Web content meta-information content transmitted from general Web servers 103. This meta-information content contains various kinds of information (metadata) relating to Web content. In this embodiment, meta-information content is assumed to include at least location information relating to Web content. Web content meta-information content will be described in detail later herein. In this embodiment, it is assumed that meta-information content collecting section 202 passively acquires meta-information content transmitted from general Web servers 103, but it is also possible to install a robotic search engine, search for general Web servers 103 connected to communication network 105, and actively acquire meta-information content.

A list content generation section 203 generates list content from collected Web content meta-information content.

A GUI section 204 is a GUI (Graphical User Interface) provided to enable an administrator of content broadcasting server 101 to control the content broadcasting server. Via GUI section 204, the administrator of content broadcasting server 101 can make various parameter settings necessary for list content generation, order list content generation, or confirm the Web content metadata or list content.

A list content distribution section 205 distributes list content generated by list content generation section 203 by means of carousel data broadcasting.

A broadcast interface section 206 is a broadcasting section for executing carousel data broadcasting. Although not shown in FIG. 2, broadcast interface section 206 is assumed to have a function for performing normal digital broadcasting.

A storage section 207 is a data storage section for storing Web content meta-information content and list content, and is connected to meta-information content collecting section 202, list content generation section 203, and list content distribution section 205.

A control section 208 controls all the configuration elements of content broadcasting server 101, and performs scheduling of list content generation and distribution, and so forth.

Content broadcasting server 101 may be configured with hardware alone, or may be hardware that has a software program execution environment. For example, of the configuration elements of content broadcasting server 101, it is possible for meta-information content collecting section 202, list content generation section 203, list content distribution section 205, and so forth, to be incorporated as software programs.

In this embodiment, content broadcasting server 101 includes a communication interface section 201 and meta-information content collecting section 202, but when meta-information content is collected offline and the collected meta-information content is stored in the storage section, communication interface section 201 and meta-information content collecting section 202 are not necessarily essential configuration elements.

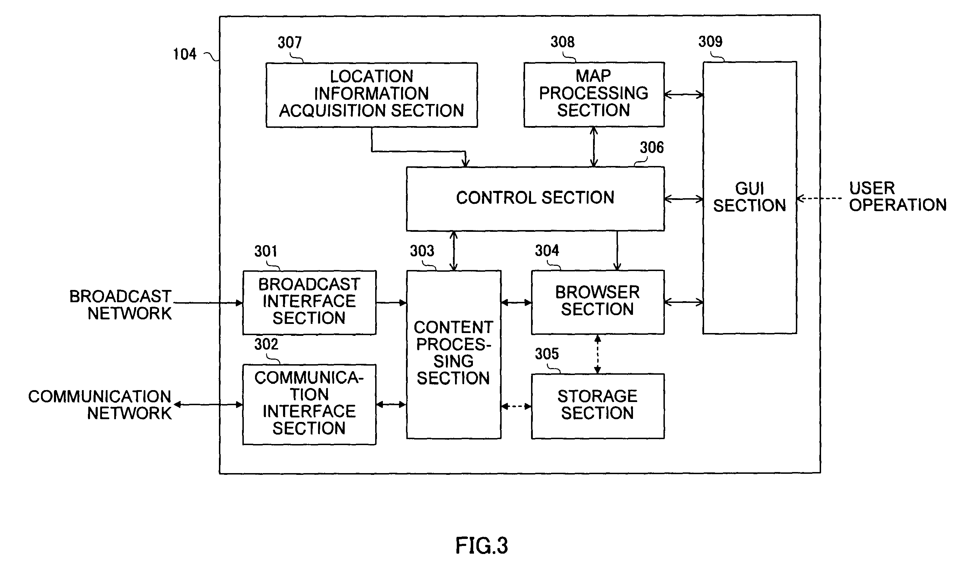

Next, the internal configuration of content receiving terminal 104 will be described with reference to FIG. 3. Content receiving terminal 104 is a client terminal capable of displaying location-dependent content. For example, with content receiving terminal 104 it is possible to view efficiently Web content relating to the current locality of content receiving terminal 104 by using location information acquired by means of GPS or the like and list content acquired from content broadcasting server 101.

A broadcast interface section 301 is a data receiving section for receiving terrestrial digital broadcasts, satellite broadcasts (BS, CS), cable TV, and suchlike broadcasts. In content adaptive distribution system 100 according to this embodiment (since the system is mainly for mobile terminal use), broadcast interface section 301 is assumed to receive terrestrial digital broadcasts. In this embodiment, broadcast interface section 301 is assumed to receive only carousel data broadcasts. Of course, content receiving terminal 104 may also be a terminal that can receive normal broadcasts (video content) by means of broadcast interface section 301, and play back that content.

A communication interface section 302 is a data transmitting/receiving section for performing bidirectional communication with any communication apparatus connected to communication network 105. In this embodiment, communication interface section 302 is used to acquire content from a server by means of Internet protocol, and in particular, HTTP.

A content processing section 303 acquires data (a control message or content) from broadcast interface section 301 or communication interface section 302 in accordance with a direction from a browser section 304 or control section 306, and outputs the acquired data to browser section 304, storage section 305, or control section 306, according to the data type. The main functions of content processing section 303 are location adaptive processing for list content and HTTP proxy processing. Content processing section 303 will be described in detail later herein.

Browser section 304 displays content received from content processing section 303, and has the same functions as a general Web browser (HTML browser). That is to say, browser section 304 outputs a message relating to content distribution (HTTP message) to content processing section 303, and receives HTML content in response. Browser section 304 is also capable of displaying content acquired from content broadcasting server 101 in the same way as content acquired from a content communication server (via content processing section 303) . If the content adaptive distribution system in FIG. 1 distributes content written in other markup languages such as BML (Broadcasting Markup Language), browser section 304 is assumed to have functions for displaying content written in those markup languages.

Storage section 305 is a data storage section comprising memory or a hard disk that temporarily stores content acquired by content processing section 303. For example, content subject to content adaptive processing and content received from a broadcast are temporarily stored in storage section 305, and transmitted to browser section 304 after undergoing predetermined processing. Storage section 305 also has a function for caching content displayed by browser section 304.

Control section 306 performs overall control of content receiving terminal 104. The main function of control section 306 is to notify content processing section 303 of location information acquired from a location information acquisition section 307 (or a map processing section 308). Control section 306 also gives directions for content acquisition and content display to content processing section 303 and browser section 304. For example, control section 306 notifies content processing section 303 of parameters (such as the reception channel and program identifier) necessary for acquiring content from content broadcasting server 101, or notifies browser section 304 of the address (URL) of content held by a general Web server 103 or the address (filename) of content stored in storage section 305, and orders display of that content.

Location information acquisition section 307 acquires geographical location information (latitude and longitude coordinate values) by means of GPS or the like, and outputs the acquired location information to control section 306. This location information shows the current location of mobile content receiving terminal 104, and is hereinafter referred to as point-of-interest location information.

Map processing section 308 has functions possessed by a general map display application, such as map drawing, map display area changing/enlargement/reduction, and map retrieval, for example. This map processing section 308 is used to display the present locality of content receiving terminal 104, or for a search for an arbitrary location (for example, a target position) by the user. Map processing section 308 can output location information for a specific point on a map (= point-of-interest location information) to control section 306. If content receiving terminal 104 does not require a map display function, map processing section 308 is an unnecessary configuration element.

A GUI section 309 is a GUI (Graphical User Interface) equipped with a function for acquiring directions related to content view, map display and map search from the user, functions for selecting content to be received from content broadcasting server 101 (reception channel selection and so forth), a function for specifying the address of content to be acquired from a content communication server 102 or general Web server 103, and a function for accepting various kinds of information input from the user.

Content adaptive distribution system 100 in FIG. 1 performs content transmission/reception by broadcasting and communication, and carries out content adaptive processing based on point-of-interest location information in content processing section 303 provided on the terminal side. Therefore, it is not necessary for content receiving terminal 104 to report location information to the server side. Also, as described later herein, in content adaptive distribution system 100 shown in FIG. 1, content distribution in which broadcasting and communication are linked is implemented by writing the location-dependent content reference destination (access method) in list content distributed by content broadcasting server 101.

Additional information is given here concerning the function of content processing section 303. As stated above, content processing section 303 acquires data in accordance with a direction from browser section 304 or control section 306, and outputs the acquired data to browser section 304, storage section 305, or control section 306 according to the data type.

First, the relationship between content processing section 303 and browser section 304 will be explained. In this embodiment, browser section 304 is an HTML browser. Browser section 304 acquires content from content communication servers 102 and general Web servers 103 by means of HTTP. HTTP message transmission/reception at this time is executed via communication interface section 302 and content processing section 303. That is to say, content processing section 303 has a function in conformance with an HTTP proxy that relays an HTTP message.

For example, when browser section 304 transmits an HTTP GET message to a general Web server 103, the GET message passes through content processing section 303 and communication interface section 302 and arrives at general Web server 103. Then, a response message (containing content) from general Web server 103 corresponding to the GET message passes through communication interface section 302 and content processing section 303 and arrives at browser section 304. However, if the content contained in the response message is content for which location adaptive processing is possible, location adaptive processing is executed on content extracted from the response message in content processing section 303, and transmission to browser section 304 is performed after restoration to the HTTP response message format again. Location adaptive processing by content processing section 303 will be described in detail later herein.

Next, the relationship between content processing section 303 and control section 306 will be explained. Vis-a-vis content processing section 303, control section 306 performs (1) ordering of data acquisition from a data broadcast, (2) ordering of list content acquisition and location adaptive processing, and (3) notification of point-of-interest location information.

In the case (1), content processing section 303 acquires content contained in a carousel data broadcast via broadcast interface section 301. Content processing section 303 receives data in accordance with the carousel data broadcast specifications, and temporarily stores received data in storage section 305. Then, when reception and storage of (division-transmitted) content is completed, content processing section 303 reports the address (filename) of the stored content to control section 306. By having this content address reported from control section 306 to browser section 304, content received from content broadcasting server 101 and stored in storage section 305 is displayed by browser section 304.

In the case (2), content processing section 303 executes location adaptive processing on list content acquired from content broadcasting server 101 or a content communication server 102. In this embodiment, location adaptive processing refers to processing that generates a list of Web content included in a region of interest set with a point indicated by point-of-interest location information as its center, that is, local region list content from list content comprising a list of Web content location information. Content processing section 303 stores the acquired list content in storage section 305 for reuse.

Local region list content here includes content that can be displayed by browser section 304 (= HTML content) and content that cannot be displayed by browser section 304.

In the former case, content processing section 303 stores local region list content in storage section 305 and reports its address (filename) to control section 306. Then, by having that address reported from control section 306 to browser section 304, local region content received from content broadcasting server 101 and stored in storage section 305 is displayed by browser section 304.

In the latter case, on the other hand, content processing section 303 transmits local region list content to control section 306. Control section 306 analyzes the local region list content and in accordance with some rule or other selects one item of location information (address) from the Web content location information (addresses) included in the local region list content, and reports this to browser section 304. Browser section 304 then displays the Web content corresponding to the reported address.

In the case (3), control section 306 reports point-of-interest location information to content processing section 303 periodically. Content processing section 303 reads list content stored in storage section 305, executes location adaptive processing by setting the point indicated by the newly acquired point-of-interest location information as the center, and generates local region list content. The generated local region list content is output to storage section 305 or control section 306 as in the case (2).

Thus, content processing section 303 executes HTTP message relay processing or location adaptive processing on content in accordance with a direction from browser section 304 or control section 306.

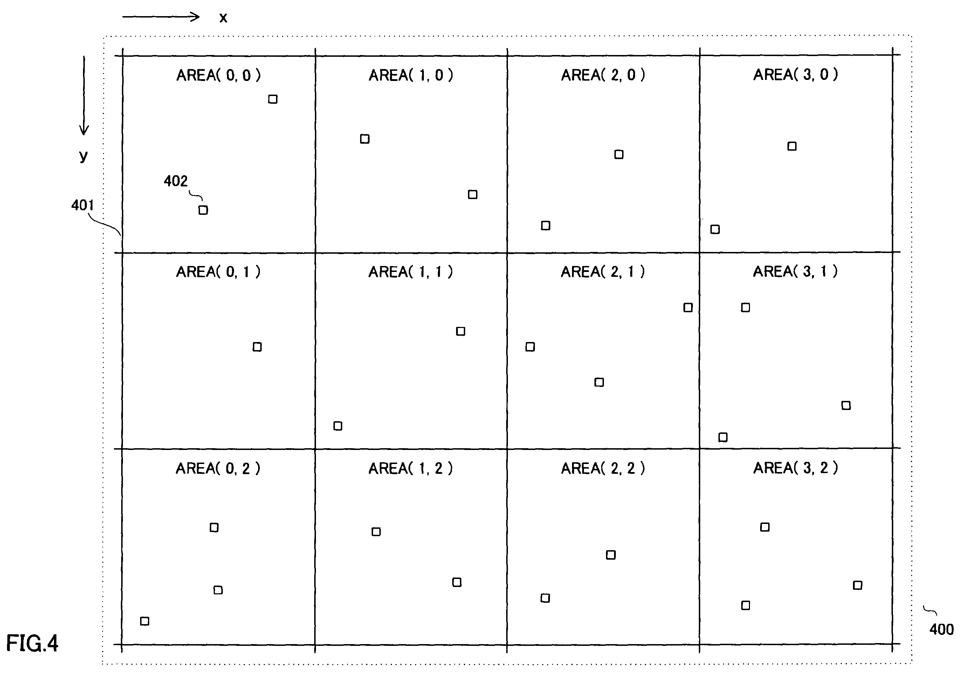

An overview will now be given of the services provided to content receiving terminals 104 in content adaptive distribution system 100. FIG. 4 shows a geographical space in which location-dependent content is distributed (= content distribution region) postulated in this embodiment.

Content distribution region 400 in FIG. 4 is divided into a rectangular mesh pattern with 4 divisions in the x-axis direction and 3 divisions in the y-axis direction. Hereinafter each rectangular mesh area will be referred to as a geographical content area, and the rectangular mesh area at the top-left of FIG. 4 will be taken as a representative geographical content area designated 401. Numbers are assigned starting from 0 in the x-axis direction and y-axis direction in FIG. 4, and each rectangular mesh area is represented by x and y coordinate values. For example, the rectangular mesh area with x coordinate = 2 and y coordinate = 1 is described as geographical content area (2, 1).

Features such as stores and facilities are distributed within the geographical content areas. Here, "feature" is a special term used in the Geographical Information System (GIS) field, and denotes "a real world phenomenon associated with a point on the earth." In this embodiment, the generic name for an entity mapped on a map as a "point" or "region" is "feature." Actual examples of "features" include buildings, parks, and roads. In FIG. 4, one feature included in geographical content area (0, 0) is assigned the number of 402.

In the following description, feature 402 will be referred to as store 402. Store 402 has content containing information relating to the goods handled by the store. This content is associated with (assigned correspondence to) the location (latitude and longitude coordinate values) of the store, and can therefore be called location-dependent content. Store 402 has a general Web server 103, publishes the URL of that server, and offers content receiving terminals 104 location-dependent content of store 402 and its meta-information content.

That is to say, general Web server 103 has location-dependent content relating to store 402 and its meta-information content. The location-dependent content relating to store 402 has network location information (a URL), and the latitude and longitude coordinate values of the point at which store 402 exists are assigned correspondence to geographical location information.

Content broadcasting server 101, content communication servers 102, and general Web servers 103 are not included in FIG. 4. If these servers can be accessed from content receiving terminals 104, these servers may exist at any locations. The geographical location of a feature and the geographical location of the general Web server 103 corresponding to that feature need not coincide. That is to say, it is not necessary for general Web server 103 of store 402 to be present at the location of that feature 402, and general Web server 103 may be in a totally different place. Also, while twelve (12) geographical content areas are shown in FIG. 4, there may be any number of geographical content areas. Similarly, any number of features may be included in individual geographical content areas.

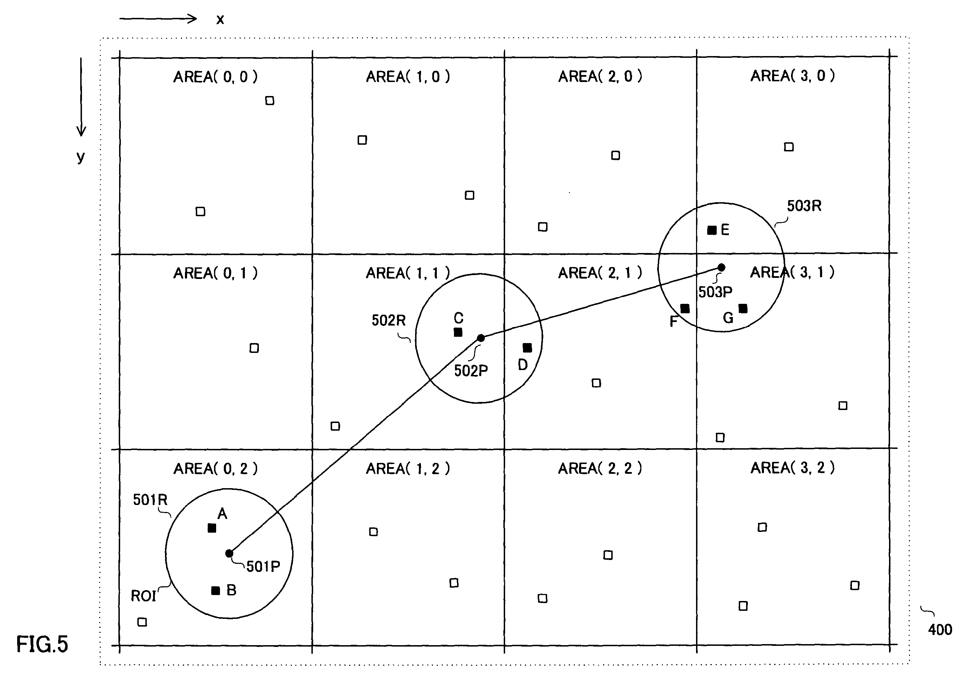

A general description will now be given of content reception by a content receiving terminal 104. FIG. 5 is a drawing for explaining the relationship between the location of content receiving terminal 104 and location-dependent content distributed to content receiving terminal 104 in content distribution region 400.

In FIG. 5, it is assumed that content receiving terminal 104 moves from point 501P to point 503P via point 502P and that the user of content receiving terminal 104 searches for information relating to his or her current locality while moving.

In FIG. 5, each of circular regions 501R, 502R, and 503R set with points 501P, 502P, and 503P as their respective centers is a region of interest (ROI). This region of interest (ROI) stipulates the search range of the location-dependent content. In this embodiment, a region of interest (ROI) is assumed to be a circular region, but a non-circular shape may also be used. When a region of interest (ROI) is made a circular region, its radius can be changed dynamically according to the speed of content receiving terminal 104, the user' s desired course, and so forth.

While following the course shown in FIG. 5, content receiving terminal 104 receives list content distributed by content broadcasting server 101, and generates local region list content from that list content. In this embodiment, list content contains information relating to all location-dependent content existing within content distribution region 400, whereas local region list content contains only information relating to location-dependent content within the region of interest.

For example, when content receiving terminal 104 is at point 501P, feature A and feature B are within region of interest 501R, and therefore information on only feature A and feature B is written in local region list content. When content receiving terminal 104 moves to point 502P, local region list content is updated to contain only information on feature C and feature D. Similarly, when content receiving terminal 104 moves to point 503P, local region list content is updated to contain only information on feature E, feature F, and feature G.

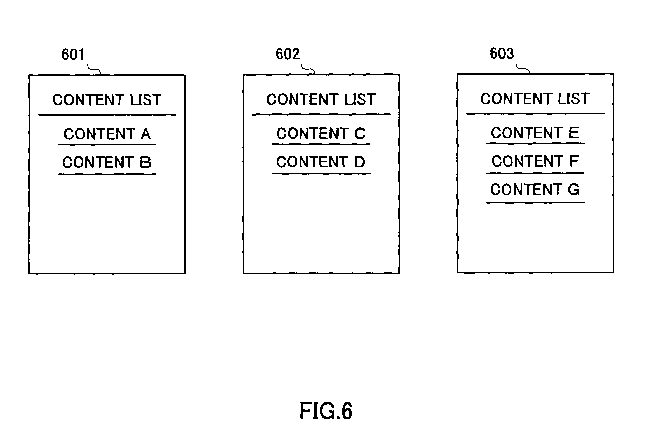

FIG. 6 shows examples of local region list content displayed by browser section 304 in content receiving terminal 104. Local region list content 601, 602, and 603 correspond to cases where content receiving terminal 104 is at points 501P, 502P, and 503P respectively. When the user selects content that he or she wishes to view from local region list content displayed by browser section 304, content receiving terminal 104 accesses the general Web server 103 corresponding to the selected content and displays location-dependent content on browser section 304.

In this way, content receiving terminal 104 can generate local region list content from list content distributed by broadcasting, and can search for location-dependent content efficiently by sequentially updating local region list content offered to the user while changing location.

Content formats according to this embodiment will now be described.

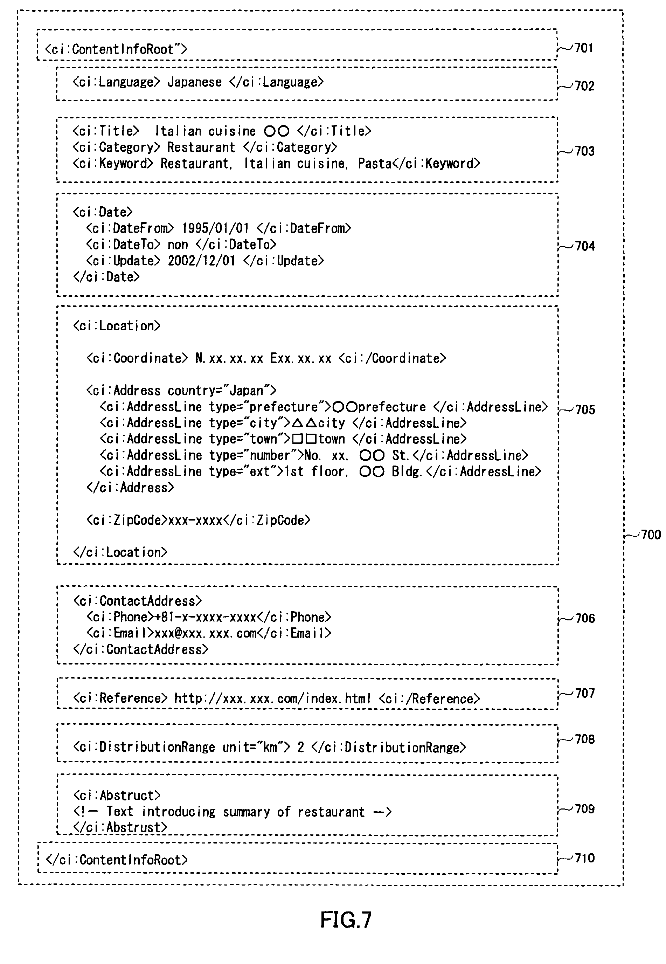

First, location-dependent content meta-information content will be described using FIG. 7. Meta-information content of location-dependent content is written in an XML based description language. In this embodiment, a fictitious namespace called ContentInfo is defined when writing meta-information content. The Namespace prefix is "ci". All examples written in XML given in this embodiment are incomplete XML documents with the XML declaration, Namespace declaration, and so forth, omitted.

In meta-information content 700 in FIG. 7, several kinds of information relating to location-dependent content are entered between start tag 701 and end tag 710 of ContentInfo element. In this embodiment, it is assumed that there are no particular restrictions on meta-information content description contents, and any information can be written.

Reference code 702 denotes a Language element indicating the language in which the contents are written. In the example in FIG. 7, location-dependent content is indicated as being written in Japanese. In the section denoted by reference code 703, the content title and category, and keywords to be used in a search, are written.

Reference code 704 denotes a Date element containing information indicating the content creation date, period of validity, and update date.

Reference code 705 denotes a Location element in which current location information is written. As subelements, the location information has a Coordinate element, Address element, and ZipCode element. In the Coordinate element, the latitude and longitude coordinate values of the point at which the feature corresponding to the location-dependent content exists are written. Hereinafter, a point at which a feature corresponding to location-dependent content exists will be referred to as a "Point Of Content" (POC). In the Address element, the address of the point at which the feature corresponding to location-dependent content exists is written, and in the ZipCode element, the ZipCode (postal code) corresponding to the address written in the Address element is written. The item corresponding to geographical location information is the Coordinate element.

Reference code 706 denotes a ContactAddress element in which ContactAddress details (telephone number and e-mail address) relating to the content are written.

Reference code 707 denotes a Reference element in which a content ContactAddress is written as a URL. In this embodiment, this Reference element corresponds to network location information.

Reference code 708 denotes a DistributionRange element for describing the content distribution range. In this example, a circular region with the point of content (POC) as its center is defined as the content distribution range, and the radius of the circular region is described by means of the Distribution element. The unit attribute of the Distribution element shows the radius unit. Hereinafter, the content distribution range will be referred to as the "region of content" (ROC).

Reference code 709 denotes an Abstract element that gives an overview of the content in text.

In the example in FIG. 7, the Coordinate element (geographical location information) and Reference element (network location information) are essential information for list content generation by content broadcasting server 101. The DistributionRange element is also information used for list content generation (although not essential).

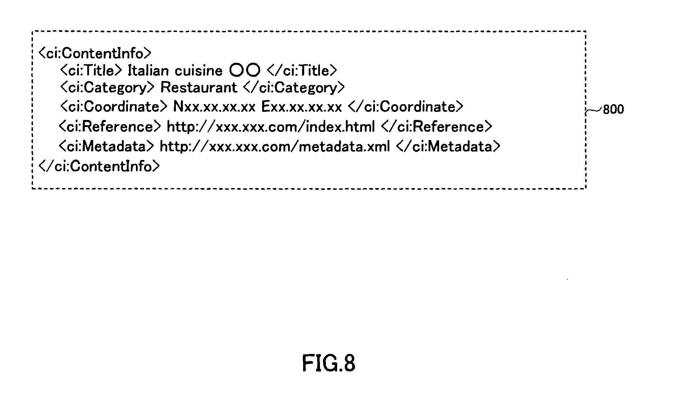

FIG. 8 is an example of content information description. This content information 800 is composed of information extracted from meta-information content 700, and includes at least network location information. ContentInfo element of the content information 800 includes as subelements a Title element, a Category element, a Coordinate element as geographical location information, a Reference element as network location information, and a Metadata element. The Metadata element here is an element that describes the ContactAddress of metadata of the content written in the Reference element. That is to say, content information 800 contains information relating to the ContactAddress for meta-information content 700.

Content broadcasting server 101 collects a plurality of meta-information content, generates list content from those meta-information content, and also generates content information. In this list content, content information is listed classified according to geographical location information. What is written in list content is not meta-information content 700 containing various kinds of information as shown in FIG. 7, but content information 800 with a reduced amount of information as shown in FIG. 8. This is because the purpose is to reduce the total amount of list content data. Therefore, if there is no limit on the total amount of list content data, meta-information content 700 may be included directly in list content. The purpose of Metadata element included in content information 800 is to enable meta-information content 700 to be referenced.

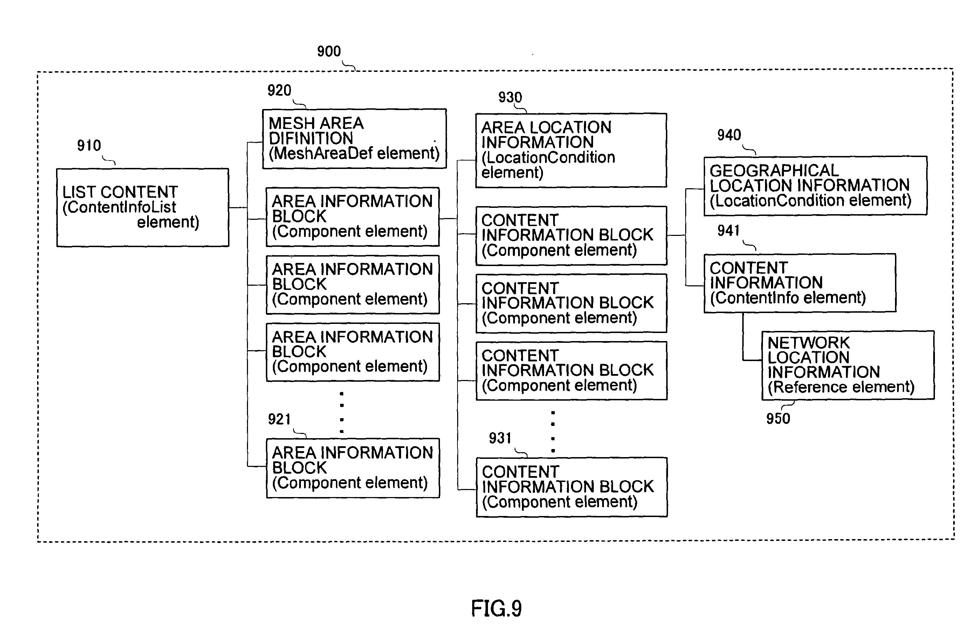

The list content structure and some description examples will now be explained with reference to FIG. 9 through FIG. 19.

List content is content written in an XML based description language that lists content information classified according to geographical location information. Hereinafter, the description language for writing list content is provisionally referred to as CLML (Content List Markup Language), and "cl" is used as the namespace prefix.

FIG. 9 shows the structure of list content. This list content 900 is described by means of XML based description language CLML and ContentInfo. FIG. 9 shows the list content structure and also XML element names for describing the various sections.

List content 900 is described by means of a list content element 910. This list content element 910 is composed of a mesh area definition 920 and area information blocks 921. Area information blocks 921 are composed of area location information 930 and content information blocks 931. Content information blocks 931 are composed of geographical location information 940 and content information 941. Content information 941 includes at least network location information 950.

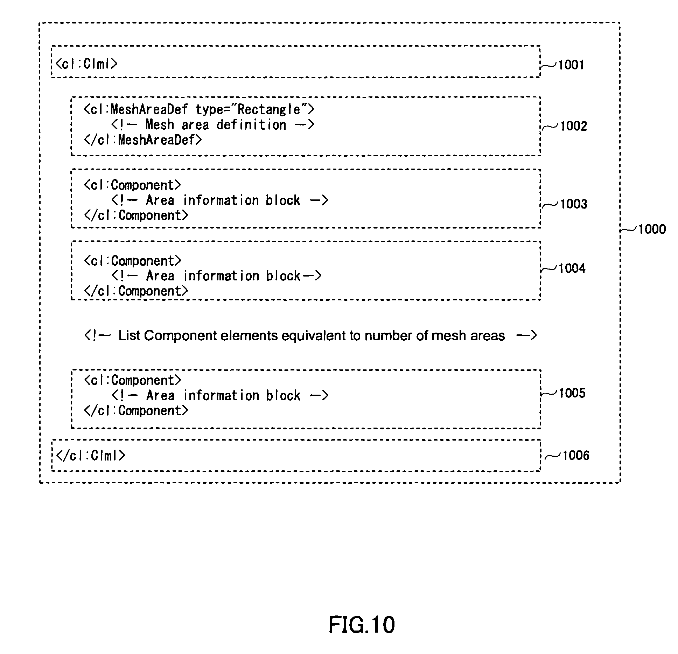

FIG. 10 shows the list content framework. List content 1000 is enclosed by Clml start tag 1001 and Clml end tag 1006, and listed therebetween are a mesh area definition 1002 and Component elements 1003 through 1005 equivalent to the number of geographical content areas. In these Component elements 1003 through 1005, area information blocks are written. As subelements, Component elements have a LocationCondition element that describes a location related condition, and a Container element that describes text data selected (extracted) when a location related condition is met.

Mesh area definition 920 in FIG. 9 will now be described. Mesh area definition 920 is written once only by means of the MeshAreaDef element in the first part of list content. In this mesh area definition 920, parameters that define the mesh division method for the content distribution region are written.

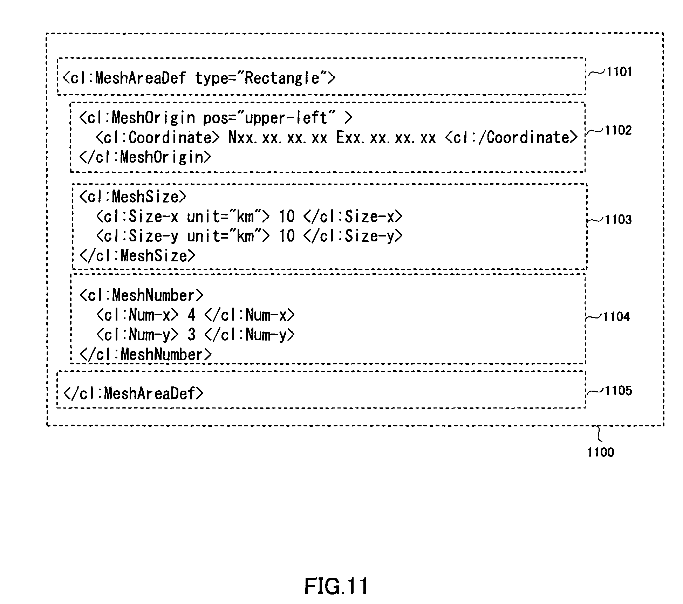

FIG. 11 shows an example of a MeshAreaDef element description. MeshAreaDef element 1100 indicates the entire portion enclosed by MeshAreaDef start tag 1101 and MeshAreaDef end tag 1105. MeshAreaDef start tag 1101 has a type attribute for indicating the shape of the mesh base unit. In this example, the mesh base unit is "Rectangle". As subelements, MeshAreaDef element 1100 has a MeshOrigin element 1102, MeshSize element 1103, and MeshNumber element 1104.

In MeshOrigin element 1102, the mesh division origin (= content distribution region origin) is written. The MeshOrigin start tag has a pos attribute that specifies the vertex of a rectangle. A Coordinate element, which is a subelement of MeshOrigin element 1102, defines the latitude and longitude coordinate values of the point indicated by the pos attribute. In the example in FIG. 11, the upper-right vertex of a rectangular area is taken as the origin.

In MeshSize element 1103, the lengths of the sides of the rectangle that is the mesh base unit are written. Here, the mesh base unit corresponds to a geographical content area. In the example in FIG. 11, the length of the sides of the rectangle is defined as 10 km by a Size-x element and Size-y element, which are subelements of MeshSize element 1103. In this example, the x-axis and y-axis are set in parallel to lines of longitude and latitude for the sake of simplicity, but description of MeshSize element 1103 method may also be extended so that the mesh base unit can be set at an angle to lines of longitude and latitude.

In MeshNumber element 1104, the number of mesh base units aligned in the x-axis direction and y-axis direction is written. In this example, four (4) rectangles are defined as being aligned in the x-axis direction, and three (3) rectangles in the y-axis direction, by a Num-x element and Num-y element, which are subelement of MeshNumber element 1104.

Area information blocks 921 in FIG. 9 will now be described. In list content 910 a number of area information blocks 921 equivalent to the number of mesh base units, that is, the number of geographical content areas are listed. In these area information blocks 921 are written geographical content area location information (for example, parameters defining the latitude and longitude coordinate values and shape of a representative point) and content information included in the geographical content area (location-dependent content metadata).

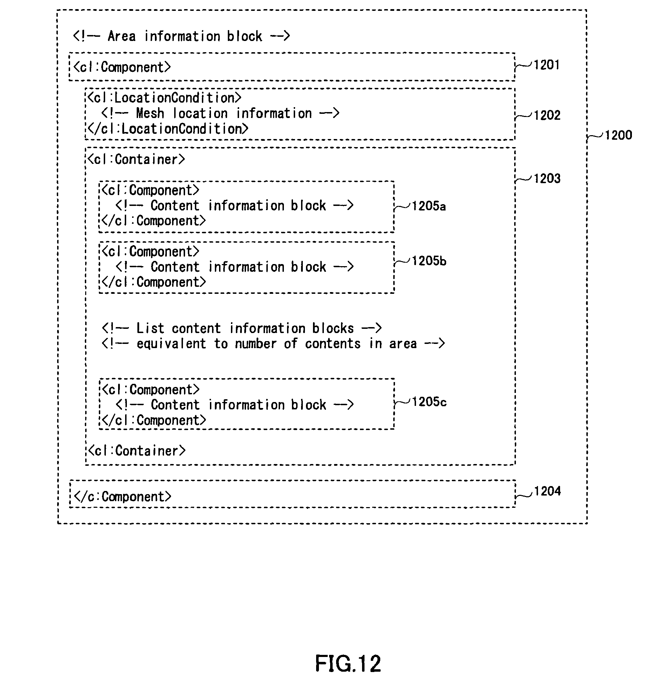

FIG. 12 shows the outline structure of an area information block. Area information block 1200 indicates the entire portion enclosed by Component start tag 1201 and Component end tag 1204, containing a LocationCondition element 1202 that describes area location information, and a Container element 1203 that lists content information blocks.

An explanation of the relationship between a Component element, LocationCondition element, and Container element will be added here. A Component element always has a LocationCondition element and Container element as subelements. A Container element can have a Component element as a subelement. A LocationCondition element cannot be used independently, but a Container element can be used independently. In this case, this means that the condition relating to location is always "true," and therefore a Component element and LocationCondition element are omitted, and only a Container element is written.

In area information block 1200 in FIG. 12, content information blocks 1205a through 1205c -equivalent to the number of location-dependent contents included in the geographical content area are listed in Container element 1203. These content information blocks are also described by means of Component elements. That is to say, list content is content in which Component elements have a nested structure.

Next, area location information 930 in FIG. 9 (corresponding to 1202 in FIG. 12) will be described. Area location information 930 is described by means of LocationCondition element in the first part of the Component element that describes area information blocks. In this area location information 930, parameters indicating the location and shape of the relevant geographical content area are written. A Container element is always written after LocationCondition element.

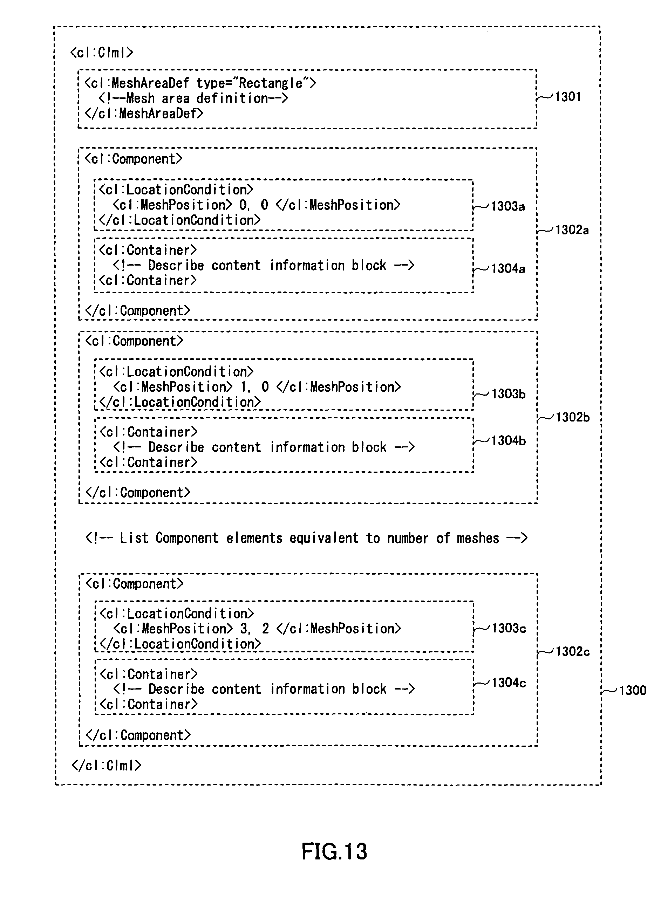

FIG. 13 is a sample description of the outline structure of list content containing area location information. In list content 1300 in FIG. 13, area location information corresponds to 1303a through 1303c. This area location information is always described by means of LocationCondition element. The LocationCondition element can have a MeshPosition element as a subelement.

In the example in FIG. 13, the location coordinates of a mesh area (= geographical content area) are described based on the x-y coordinate system shown in FIG. 4 by means of a MeshPosition element, which is a subelement of LocationCondition element. For example, the mesh location coordinates of area (3, 2) in FIG. 4 are described as <cl:MeshPosition>3, 2</cl:MeshPosition> by means of the MeshPosition element. That is to say, in the list content in FIG. 13, area location information defines the mesh location and shape relatively based on a mesh area definition. Area location information described in a MeshPosition element is referred to as a mesh index number.

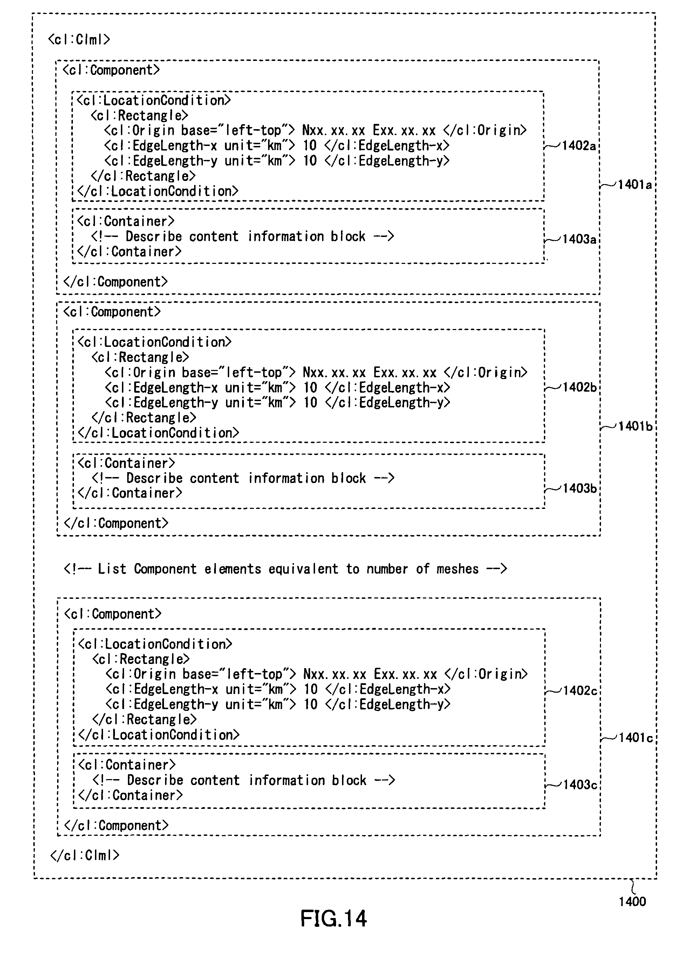

However, area location information may be described without using a mesh area definition. FIG. 14 is a drawing showing the outline structure of list content that does not have a mesh area definition. In list content 1400 in FIG. 14, area location information corresponds to 1402a through 1402c. Area location information is described by means of a LocationCondition element in the same way as in FIG. 13. As subelements, this LocationCondition element can have not only a MeshPosition element but also an XML element that defines the location and shape of a geographical region (circle, rectangle, polygon, etc.).

In the example in FIG. 14, a rectangular mesh area is defined by a Rectangle element. A Rectangle element can have as subelements an Origin element that defines the mesh area origin, and an Edge Length-x element and Edge Length-y element that determine the lengths of two sides of the rectangle, and the latitude and longitude coordinate values of the top-left vertex of the rectangle and the lengths of the vertical and horizontal sides of the rectangle are described by these elements.

The area location information in FIG. 13 and FIG. 14 will now be compared. The list content in FIG. 13 requires 7 lines to write the mesh area definition, whereas area location information 1303a through 1303c can be written in 3 lines. On the other hand, the list content in FIG. 14 does not require mesh area definition, whereas 7 lines are required for the description of area location information 1402a through 1402c. Thus, advantages of mesh area definition are that area location information can be represented relatively, the amount of content description can be reduced, and content readability can be improved. Another advantage of mesh area definition is that the distribution of geographical content areas existing in a content distribution region can be ascertained without analyzing all list content.

Next, content information blocks 931 in FIG. 9 (corresponding to 1205a through 1205c in FIG.12) will be described. Content information blocks 931 are used to describe information relating to content included in a geographical content area stipulated by a LocationCondition element that describes an area information block in a Container element that is a subelement of the Component element that describes an area information block. A plurality of content information blocks are listed within a Container element that is a subelement of a Component element describing an area information block. A content information block is described by means of a Component element.

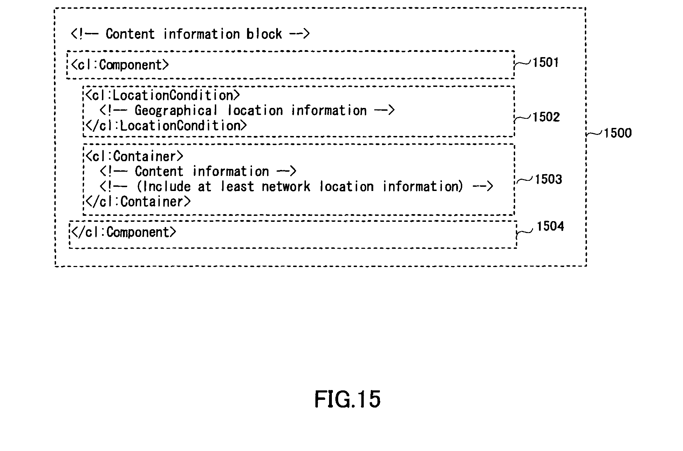

FIG. 15 is a sample description of the outline structure of a content information block. Content information block 1500 corresponds to the entire portion enclosed by Component start tag 1501 and Component end tag 1504, containing geographical location information 1502 (corresponding to 940 in FIG. 9) described by means of a LocationCondition element, and content information 1503 (corresponding to 941 in FIG. 9) described by means of a Container element.

In geographical location information 1502, information indicating a geographical location relating to location-dependent content corresponding to content information 1503 is written. For example, if location-dependent content is a store, geographical location information 1502 contains latitude and longitude coordinate values indicating the point at which that store is situated. If location-dependent content is a public park that has a certain area, parameters defining a representative origin (reference point) of that park and its shape are written in geographical location information 1502. If location-dependent content is advertising content with a restricted distribution region, parameters defining a representative origin of that advertising content distribution region and its shape are written in geographical location information 1502. Information written in geographical location information 1502 is extracted from meta-information content of location-dependent content shown in FIG. 7.

Meanwhile, in content information 1503, location-dependent content metadata is written in a Container element by means of a ContentInfo element. An actual ContentInfo element description example is shown in FIG. 8. Content information 1503 includes at least network location information (corresponding to 950 in FIG. 9). The same information as geographical location information 1502 - that is, information indicating the geographical location to which location-dependent content relates-may also be included in content information 1503.

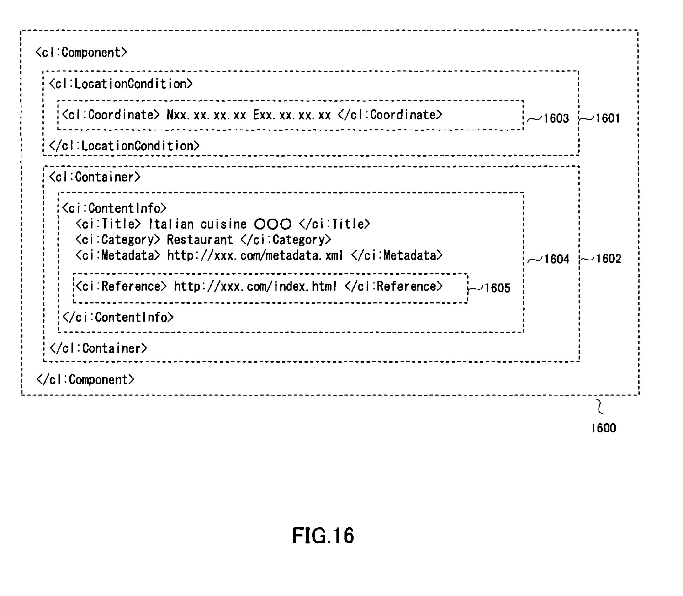

FIG. 16 through FIG. 19 are drawings showing actual examples of content information 1503 in FIG. 15.

Content information 1600 in FIG. 16 is a sample description for a restaurant. In geographical location information 1601, latitude and longitude coordinate values indicating the location of the restaurant are written by means of Coordinate element 1603. In content information 1602, the content title (Title element), category (Category element), a URL (Metadata element) indicating the location of meta-information content corresponding to content information 1600, and a URL (Reference element 1605) indicating the location of location-dependent content corresponding to content information 1600, are written by means of ContentInfo element 1604. Reference element 1605 corresponds to network location information (950 in FIG. 9).

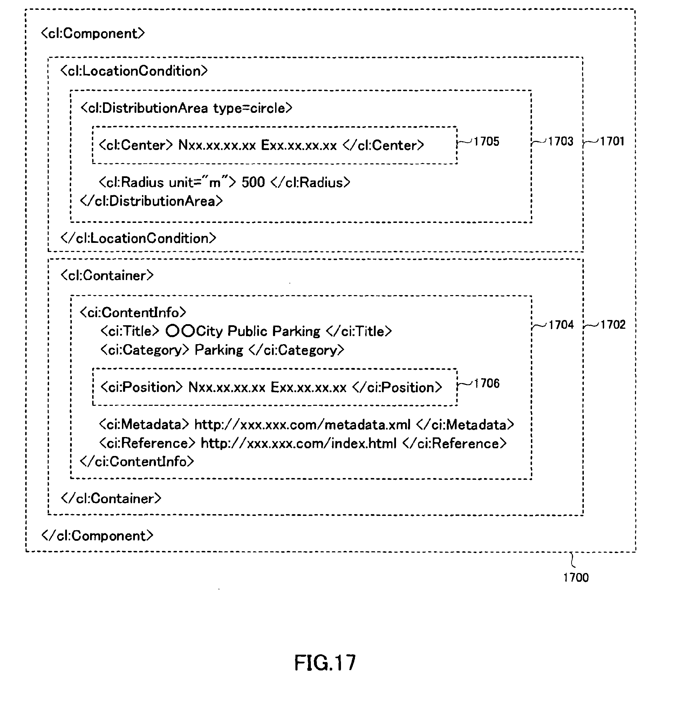

Content information 1700 in FIG. 17 is a sample description for a car park. In geographical location information 1701, the content distribution range is written by means of Distribution Area element 1703. In this example, the distribution range is defined as a circular area by a type attribute of Distribution Area element 1703, and the center coordinates and radius of the circular area are defined by Center element 1705 and a Radius element. Here, latitude and longitude coordinate values indicating the location of the location-dependent content extracted from meta-information content as shown in FIG. 7 are written in Center element 1705.

Meanwhile, in content information 1702, the content title and category, point information (position element 1706) indicating the location of location-dependent content corresponding to content information 1700, a URL indicating the location of metadata corresponding to content information 1700, and a URL (= network location information) indicating the location of location-dependent content corresponding to content information 1700, are written by means of ContentInfo element 1704, in the same way as in FIG. 16. In this example, latitude and longitude coordinate values are written in the Position element, but these are the same values as the latitude and longitude coordinate values written in the Center element, a subelement of the Distribution Area element.

Here, additional information will be given concerning Center element 1705 and Position element 1706 in FIG. 17. As stated above, latitude and longitude coordinate values indicating the location of location-dependent content, extracted from meta-information content as shown in FIG. 7, are written in both Center element 1705 and Position element 1706. Center element 1705 written in LocationCondition element 1701 is information added for location adaptive processing by the content receiving terminal, and is not information provided to the user. On the other hand, Position element 1706 written in Container element 1702 is a subelement of the ContentInfo element. Information written in this ContentInfo element is information that can be provided to the user as location adaptive processing output. That is to say, information written in the LocationCondition element is deleted in the process of location adaptive processing, and therefore, although redundant, geographical location information of location-dependent content is also added within the Container element. Location adaptive processing will be described in detail later herein.

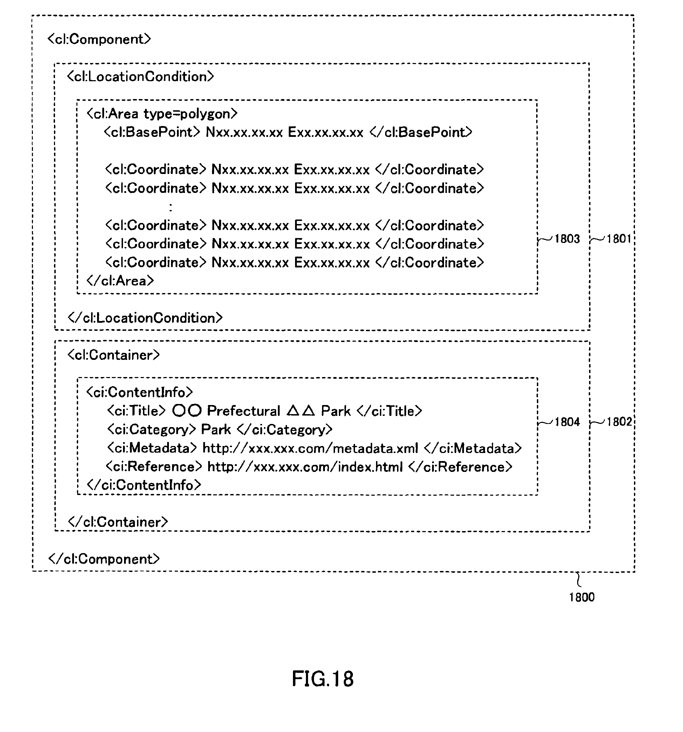

Content information 1800 in FIG. 18 is a sample description for a public park covering a comparatively large area. In geographical location information 1801, a representative origin (reference point) of the park and its shape are described by means of Area element 1803. In this example, the shape of the area is defined as a polygon by the type attribute of Area element 1803, the latitude and longitude coordinate values of a representative point in the park are described by means of a BasePoint element, and the latitude and longitude coordinate values of the vertices of the polygon are listed by means of a plurality of Coordinate elements. Meanwhile, in content information 1802, the content title and category, a URL indicating the location of meta-information content corresponding to content information 1800, and a URL (= network location information) indicating the location of location-dependent content corresponding to content information 1800, are written by means of ContentInfo element 1804, in the same way as in FIG. 16.

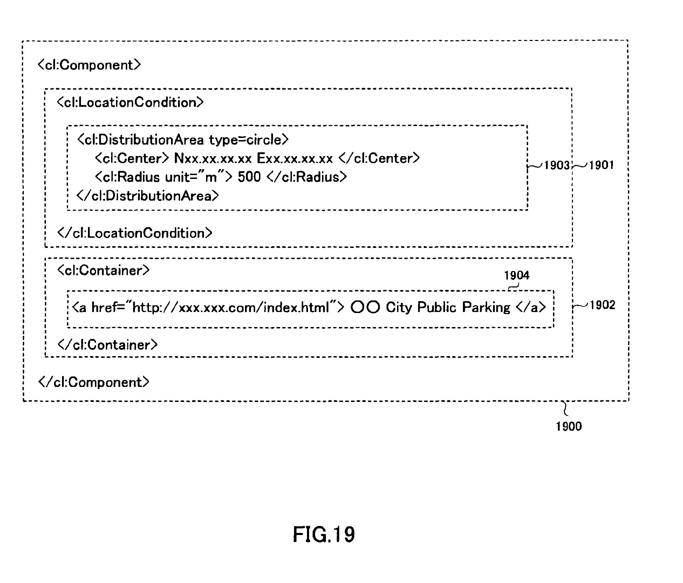

Content information 1900 in FIG. 19 is a sample description in a case where HTML content is output as location adaptive processing results for a car park. In geographical location information 1901, the content distribution region is described by means of Distribution Area element 1903, in the same way as in the case shown in FIG. 17. Meanwhile, in content information 1902, URL (= network location information) 1904 indicating the location of location-dependent content is written by means of an HTML Anchor element. The process of generating HTML content by means of location adaptive processing will be described later herein.

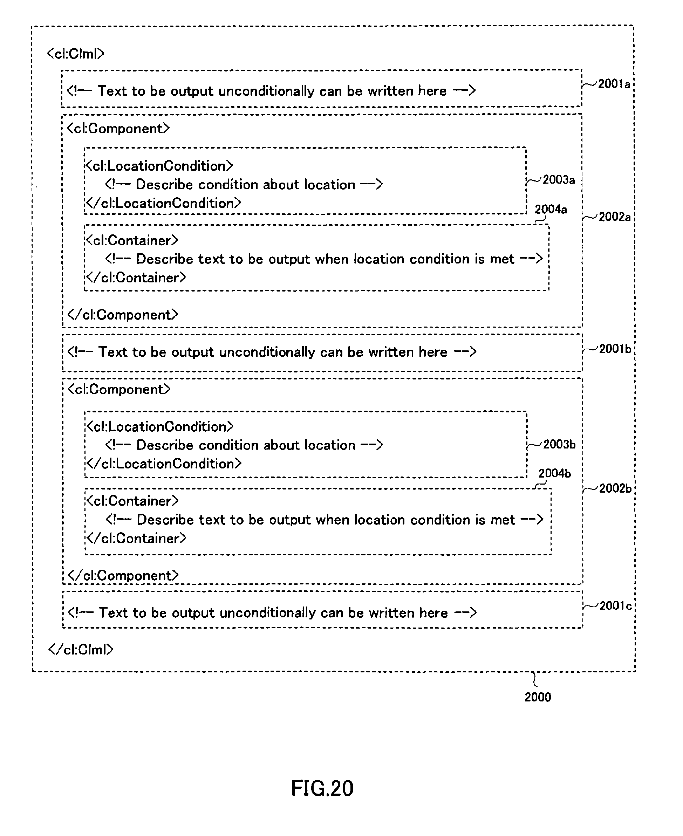

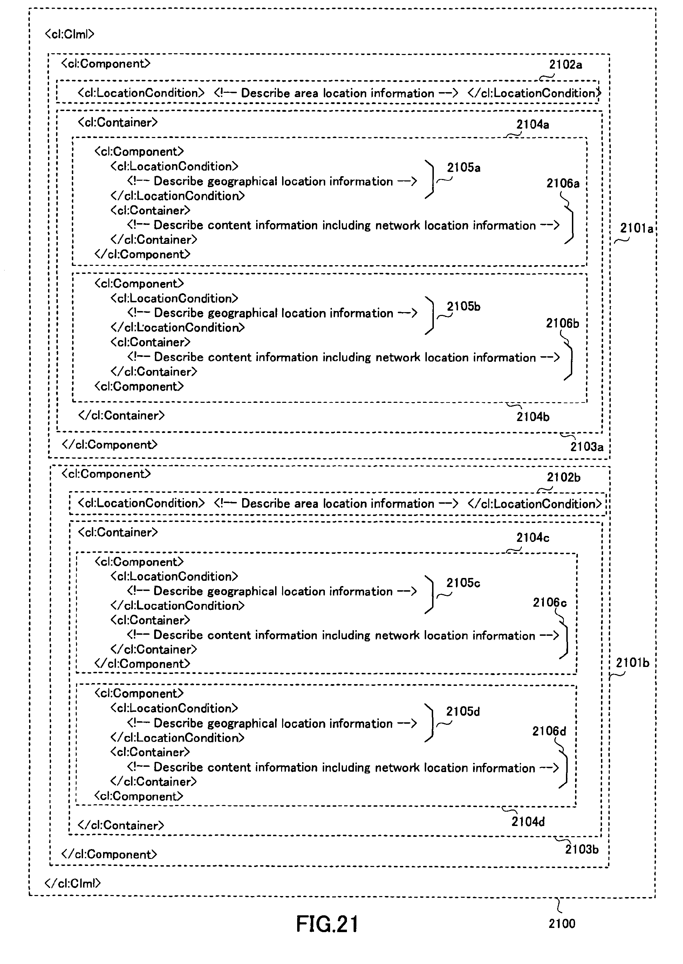

Next, an overview will be given of location adaptive processing for list content written in CLML. FIG. 20 and FIG. 21 show in greater detail the framework of the list content shown in FIG. 10 (the Namespace declaration and so forth are omitted) . The list content in FIG. 20 has a simple structure in which Component elements are not nested, while the list content in FIG. 21 has a dual structure in which Component elements are nested.

First, the list content in FIG. 20 will be explained. List content 2000 in FIG. 20 has two Component elements, 2002a and 2002b. Text description parts 2001a through 2001c enclosing these Component elements are sections in which any text can be written by means of a description language that has a Namespace other than CLML. For example, when HTML content is generated from CLML content by means of location adaptive processing by content receiving terminal 104, the text necessary for generating HTML content is written in text description parts 2001a through 2001c.

Component elements 2002a have LocationCondition elements 2003a and 2003b and component elements 2002b have Container elements 2004a and 2004b as subelements. LocationCondition elements 2003a and 2003b are "location related conditions" referenced in location adaptive processing. In location adaptive processing, location condition determination processing using these "location related conditions" and "location information" input from outside is executed. On the other hand, Container elements 2004a and 2004b describe text to be output when a "location related condition" described in a LocationCondition element is satisfied.

That is to say, in content output as the result of location adaptive processing, (1) text description parts 2001a through 2001c are always included, (2) LocationCondition elements are not included, and (3) with regard to the contents written in Container elements, inclusion or non-inclusion is determined depending on the result of location condition determination by the LocationCondition elements.

Next, the list content in FIG. 21 will be explained. List content 2100 in FIG. 21 is a description conforming to the list content structure shown in FIG. 9. List content 2100 has two Component elements (2101a and 2101b). Each Component element has a LocationCondition element (2102a, 2102b) and Container element (2103a, 2103b).

Container element 2103a has two Component elements, 2104a and 2104b, as subelements, and Container element 2103b has two Component elements, 2104c and 2104d, as subelements. Each of Component elements 2104a through 2104d located within list content 2100 has a LocationCondition element and a Container element. Thus, list content 2100 has a structure in which Component elements are nested.

A Component element has a LocationCondition element as a subelement. In list content 2100, content area location and shape are defined by outer LocationCondition elements (2102a and 2102b), and geographical location information relating to the respective location-dependent content is defined by inner LocationCondition elements.

In content receiving terminal 104 location adaptive processing, first, location condition determination (true/false determination) is performed for the LocationCondition elements (2102a and 2102b) that are subelements of the outer Component element. Then location condition determination is performed for a LocationCondition element included in a Container element forming a set with a LocationCondition element for which the location condition determination is "true."

For example, assume that in location adaptive processing the location condition determination for LocationCondition element 2102a is "true" and the location condition determination for LocationCondition element 2102b is "false." In this case, for Component element 2101a, processing is performed on Container element 2103a, which is a subelement of Component element 2101a. For Component element 2101b, on the other hand, processing is not performed on Container element 2103b, and the data is discarded. This means that the text written in Container element 2103b is not included in content output by location adaptive processing.

Furthermore, with regard to Container element 2103a, location condition determination is performed for LocationCondition elements 2105a and 2105b contained therein. Assume here that the location condition determination for LocationCondition element 2105a is "true" and the location condition determination for LocationCondition element 2105b is "false." In this case, for Component element 2104a, processing is performed on Container element 2106a, which is a subelement of Component element 2104a. For Component element 2104b, on the other hand, processing is not performed on Container element 2106b, and the data is discarded. In this case, only the text written in Container element 2106a is included in content output as a result of location adaptive processing.

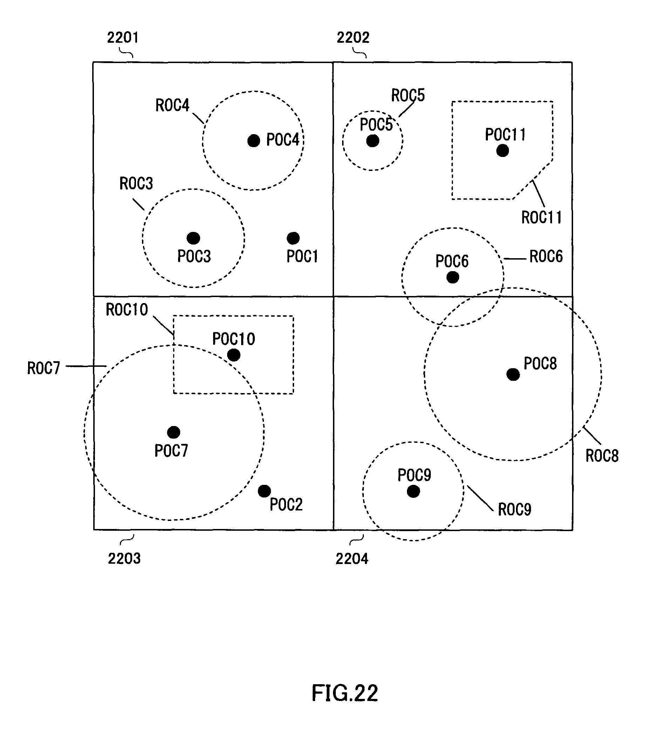

Location adaptive processing of Content receiving terminal 104 will be now described with reference to FIG. 22 through FIG. 25.

FIG. 22 shows an example of the distribution of location-dependent content in geographical space. Four content areas 2201 through 2204 and 11 items of location-dependent content POC1 through POC11 are located in FIG. 22. The points indicated by POC1 through POC11 correspond to representative origins of location-dependent content. For location-dependent content POC3 through POC9, circular content distribution regions ROC3 through ROC9 are set. Features corresponding to location-dependent content POC10 and POC11 are assumed to have a certain area, and in FIG. 22, the locations and shapes of these features are represented by rectangles ROC10 and ROC11. "POC" means the point of content, and "ROC" means the region of content.

Here, list content corresponding to the arrangement of content areas and location-dependent content shown in FIG. 22 is assumed. List content corresponding to FIG. 22 has the same structure as the list content shown in FIG. 21. That is to say, in list content corresponding to FIG. 22, a number of area information blocks equivalent to the number of content areas are listed, and content information blocks corresponding to location-dependent content included in the relevant area are listed in each area information block.

In location adaptive processing, at least (1) selection process of area information block and (2) selection process of content information block are executed, and therefore these two kinds of processing will be described in turn.

First, (1) selection process of area information block will be described. In area information block selection processing, a content area relating to a region of interest (ROI) is selected from list content.

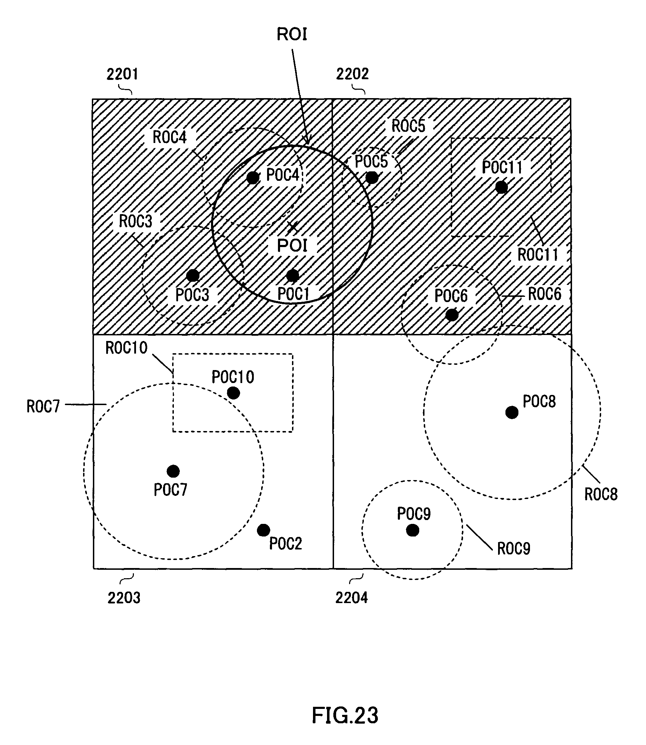

In FIG. 23, a point of interest (POI) and region of interest (ROI) are set in a content area of FIG. 22. In the figure, content receiving terminal 104 is at the point of interest (POI). In location adaptive processing, determination of overlapping of a content area and region of interest (ROI) is performed for all area information blocks included in list content. Overlapping of a content area (= rectangle) and region of interest (ROI) can be determined by means of simple geometric computation. In the case shown in FIG. 23, content areas 2201 and 2202 overlap with the region of interest (ROI), and therefore only these areas are subject to (2) selection process of content information block.

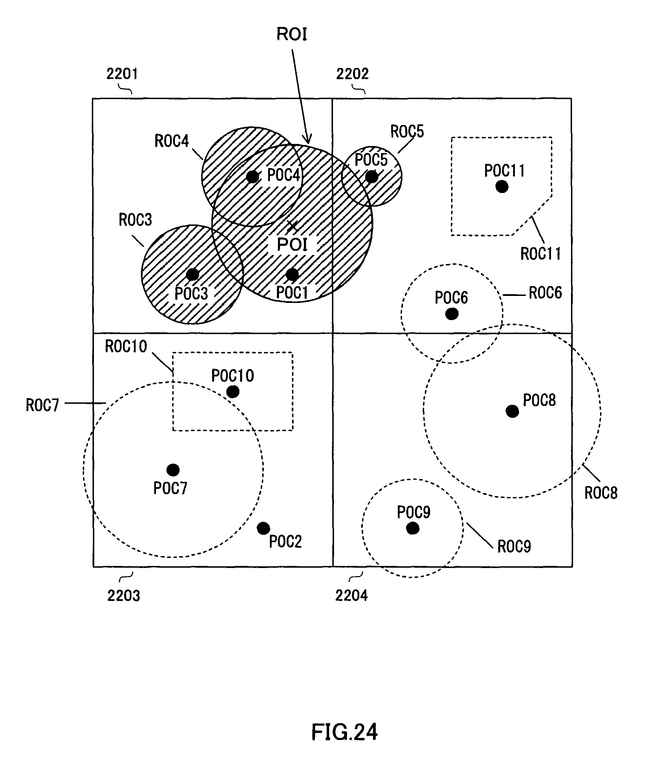

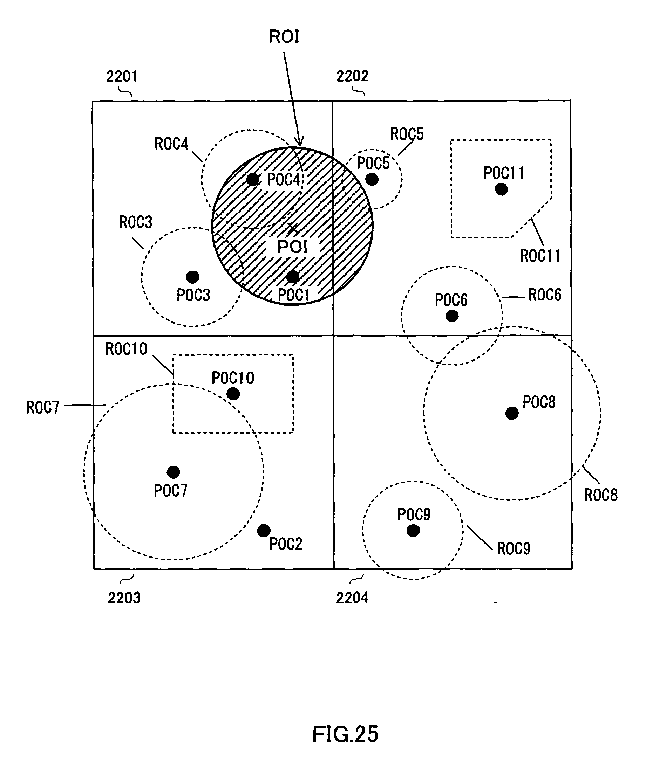

Next, (2) selection process of content information block will be described. In selection process of content information block, selection of a content information block relating to a region of interest (ROI) is performed for an area information block selected in selection process of area information block. Here, two methods of selection process of content information block are shown with reference to FIG. 24 and FIG. 25.

FIG. 24 is a drawing for explaining selection process of content information block by determination of overlapping of a region of interest (ROI) and regions of content (ROC) . With this method, a content information block that has a region of content (ROC) overlapping with a region of interest (ROI), and a content information block that has a point of content (POC) included in a region of interest (ROI), are selected. That is to say, in FIG. 24, POC1, POC3, POC4, and POC5 are selected by selection process of content information block. In location adaptive processing, determination of overlapping of a region of interest (ROI) and geographical location information is performed for an area information block for which list content has been selected. Overlapping of a region of interest (ROI) and geographical location information (point, circle, rectangle) can be determined by simple geometric computation.

FIG. 25 is a drawing for explaining selection process of content information block by determination of overlapping of a region of interest (ROI) and points of content (POC). With this method, a content information block that has a point of content (POC) included in a region of interest (ROI) is selected. That is to say, in FIG. 25, POC1 and POC4 are selected by selection process of content information block. In location adaptive processing, determination of overlapping of a region of interest (ROI) and geographical location information is performed for an area information block for which list content has been selected. Overlapping of a region of interest (ROI) and geographical location information (point) can be determined by simple geometric computation.

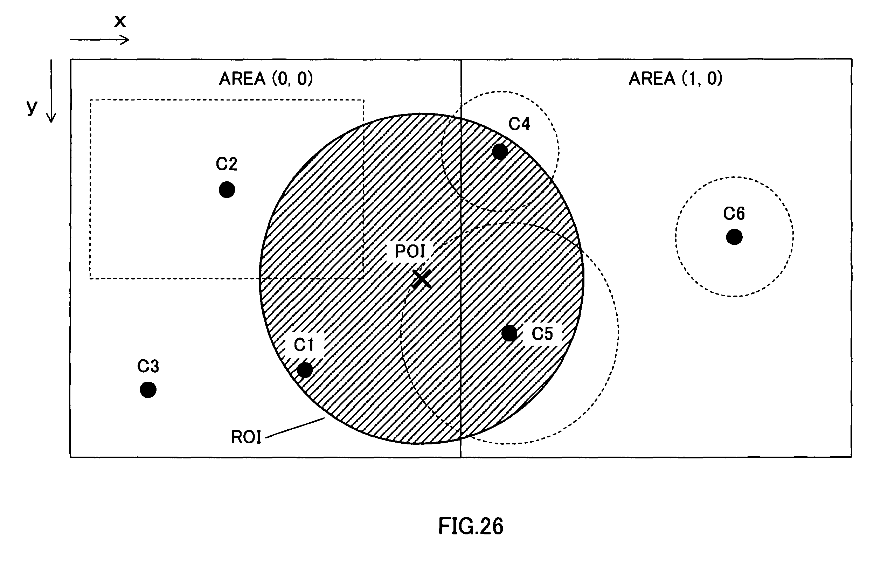

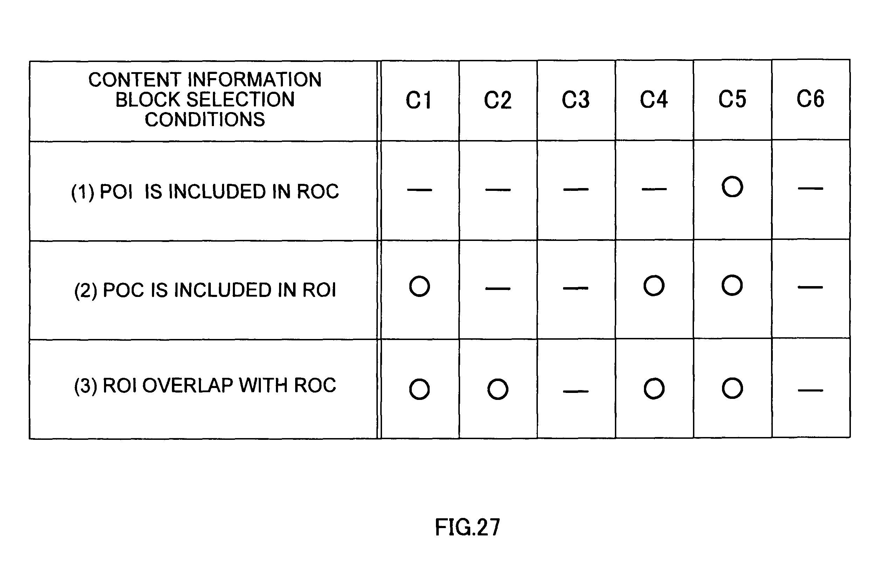

A further explanation of selection process of content information block will now be given with reference to FIG. 26 and FIG. 27. FIG. 26 is a drawing showing an example of the arrangement of content areas and location-dependent content. In FIG. 26, six items of location-dependent content C1 through C6 are located within two content areas. A content region is set for C2 and C4 through C6. A point of interest (POI) and region of interest (ROI) are also set in the figure.

Here, three kinds of selecting conditions for content information block are considered: (1) "POI is included in ROC," (2) "POC is included in ROI," and (3) "ROI overlaps with ROC." FIG. 27 shows location-dependent content that meets these three selecting conditions for content information block for FIG.26.

Condition (1) "POI is included in ROC" means that information of location-dependent content corresponding to a region of content is provided only when a point of interest (POI), that is, content receiving terminal 104 is included in a content area. In FIG. 26, only C5 meets this condition. This condition (1) is appropriate when distributing content whose distribution region it is wished to limit (for example, regionally restricted advertising content), or providing content only to users in a specific region, and can be called a method where content provider has predominance.

Condition (2) "POC is included in ROC" means that information of location-dependent content corresponding to a point of content is provided only when a representative origin of location-dependent content is included in a user's region of interest. In FIG. 26, C1, C4, and C5 meet this condition. When this condition is applied, a region of content (ROC) is not considered even if it has been defined. This condition (2) is appropriate when searching for location-dependent content included in a specific region with a content receiving terminal 104 at its center, and can be called a method where the user of content receiving terminal 104 has predominance.

Condition (3) "ROI overlaps with ROC" means that information of location-dependent content corresponding to a region of content (ROC) is provided only when a search range (= ROI) set by a user and a distribution range (= ROC) set by a content provider overlap. With this condition (3), if an ROC has not been set in location-dependent content, condition (2) is applied. In FIG. 26, C1, C2, C4, and C5 meet this condition. This condition (3) falls midway between conditions (1) and (2). This condition can also be said to be appropriate when a region of content (ROC) does not mean the distribution region of a location-dependent content,, but means a geographical area relating to location-dependent content.

For example, when location-dependent content is a public park that has a large area, this park is not defined only by a "representative origin" but is defined by geographical area (location and shape). This is to avoid the occurrence of a situation in which, when a "representative origin" is set near the center of the park, this representative origin and the region of interest (ROI) do not overlap,-that is, location-dependent content is not detected.

As described above, in selection process of content information block, computation is performed to determine overlapping of, or an inclusion relationship between, "point of interest (POI)/region of interest (ROI)" and "point of content (POC)/region of content (ROC)."

Here, "region of content (ROC)" is used without distinguishing between a "content distribution region" and a "geographical region relating to content," but it is possible for the list content structure and CLML language specifications to be amended so as to explicitly distinguish between the two.

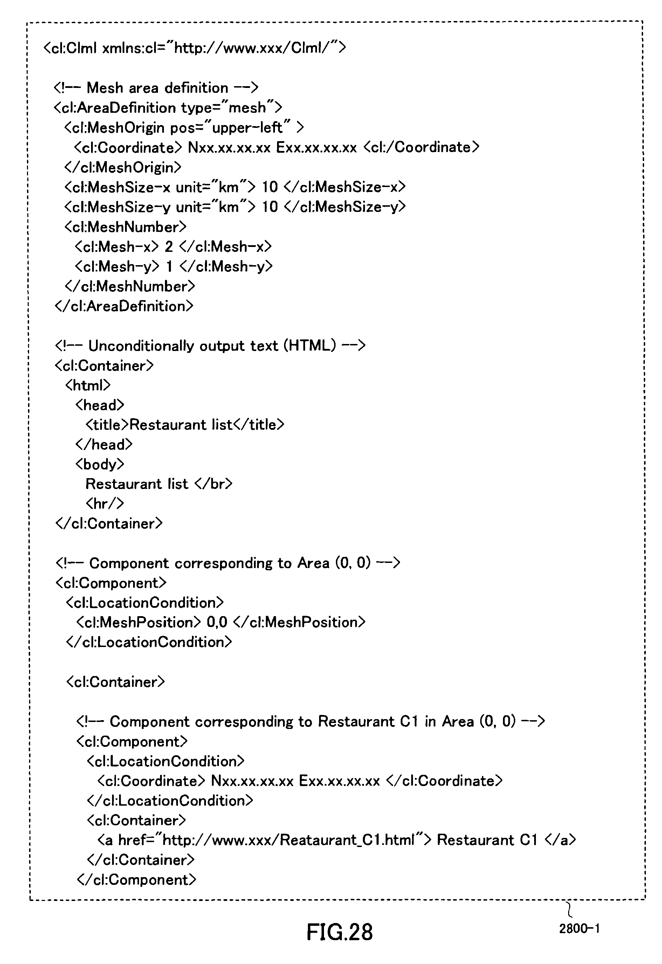

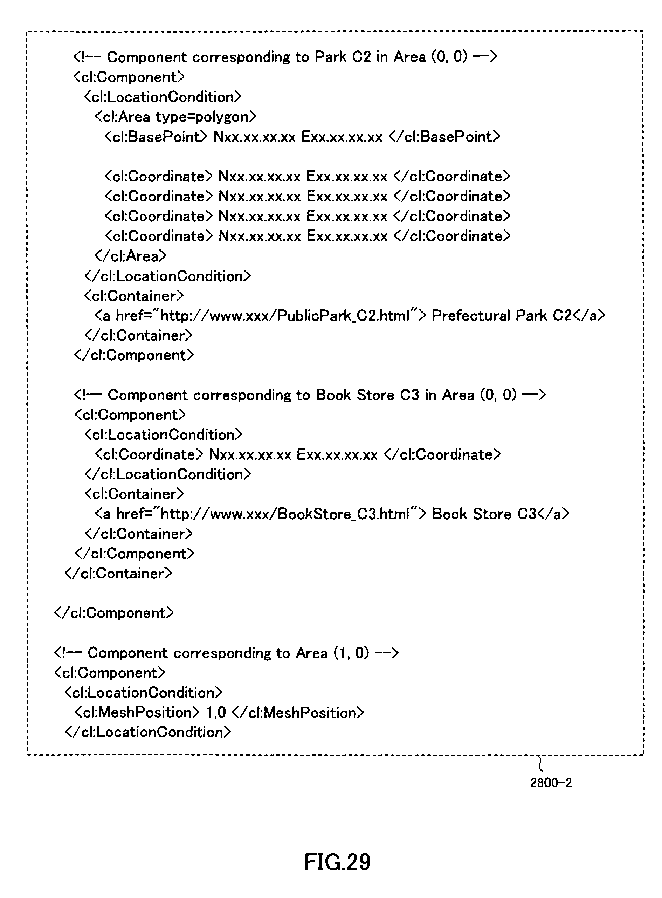

FIG. 28 through FIG. 30 show list content corresponding to FIG. 26. In this list content an HTML tag is embedded so that HTML content is output as a result of location adaptive processing, and a link to location-dependent content is described in a Container element within a Component element corresponding to a content information block by means of an HTML Anchor tag.

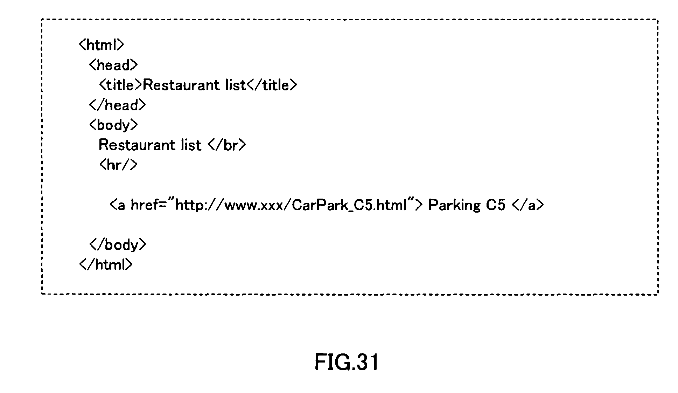

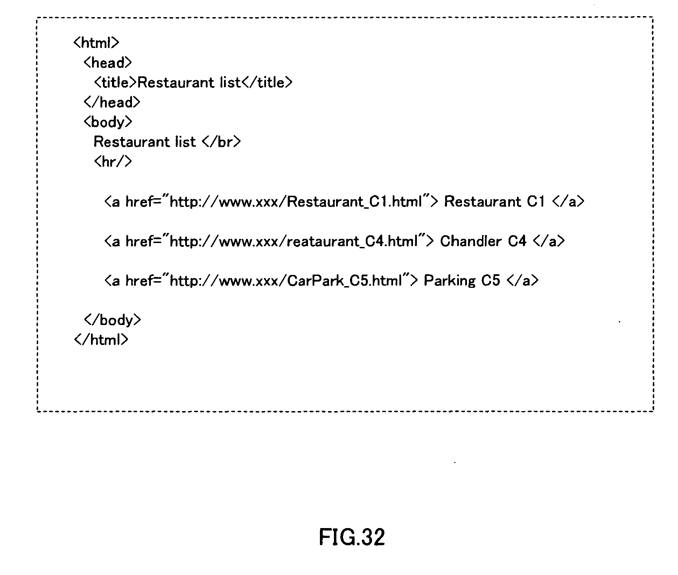

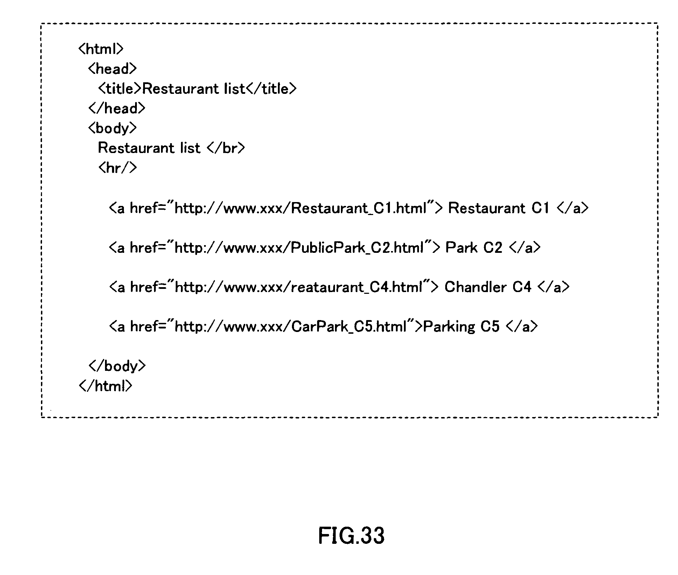

FIG. 31 through FIG. 33 show content output when location adaptive processing is performed for the list content in FIG. 28 through FIG. 30 with the ROI shown in FIG. 26 set. FIG. 31 shows HTML content generated when condition (1) in FIG. 27 is applied, FIG. 32 shows HTML content generated when condition (2) in FIG. 27 is applied, and FIG. 33 shows HTML content generated when condition (3) in FIG. 27 is applied. This HTML content is local region list content and does not contain any CLML tags.

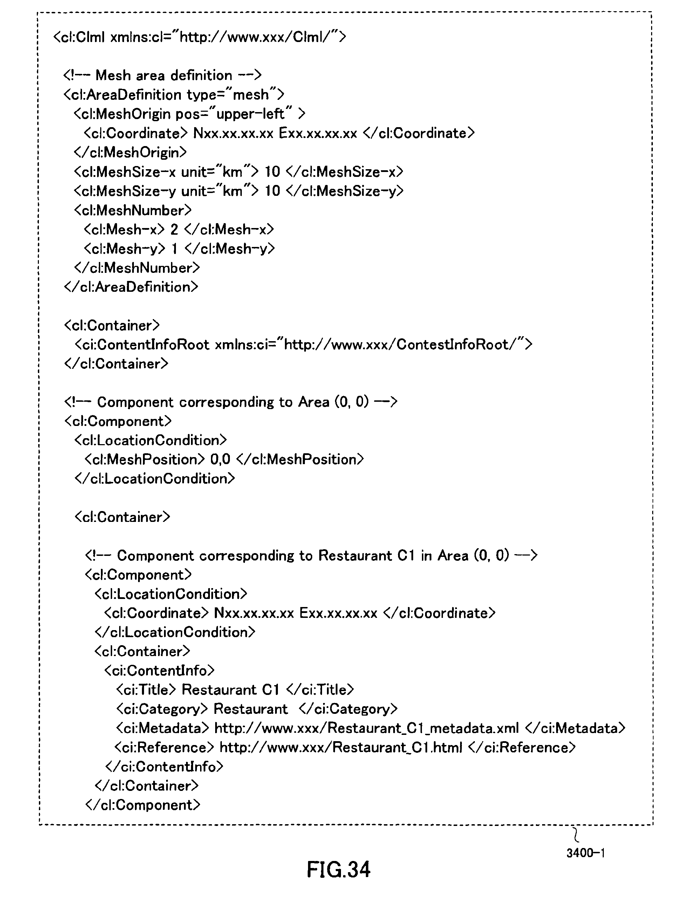

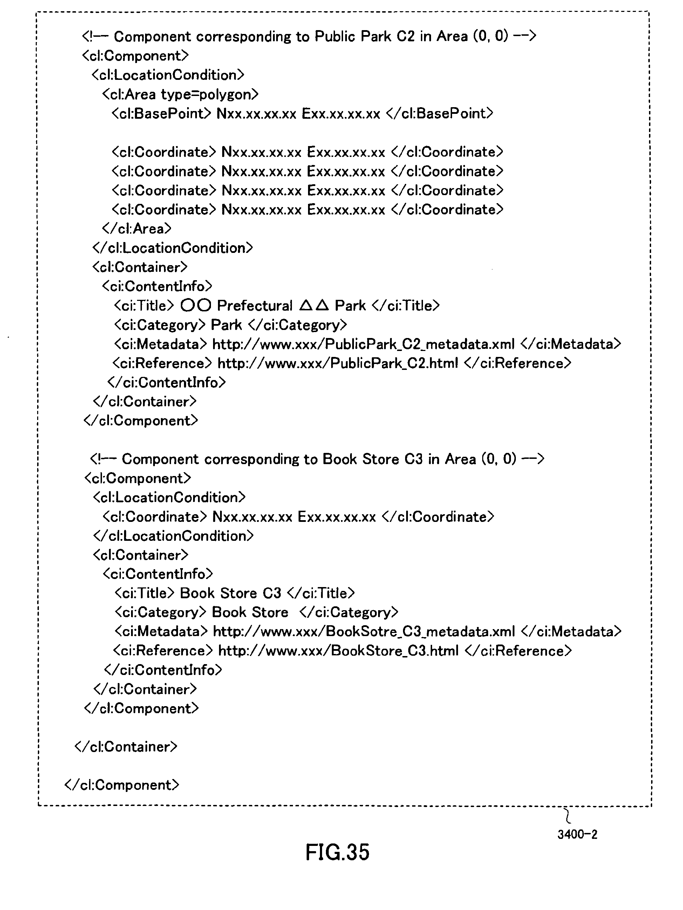

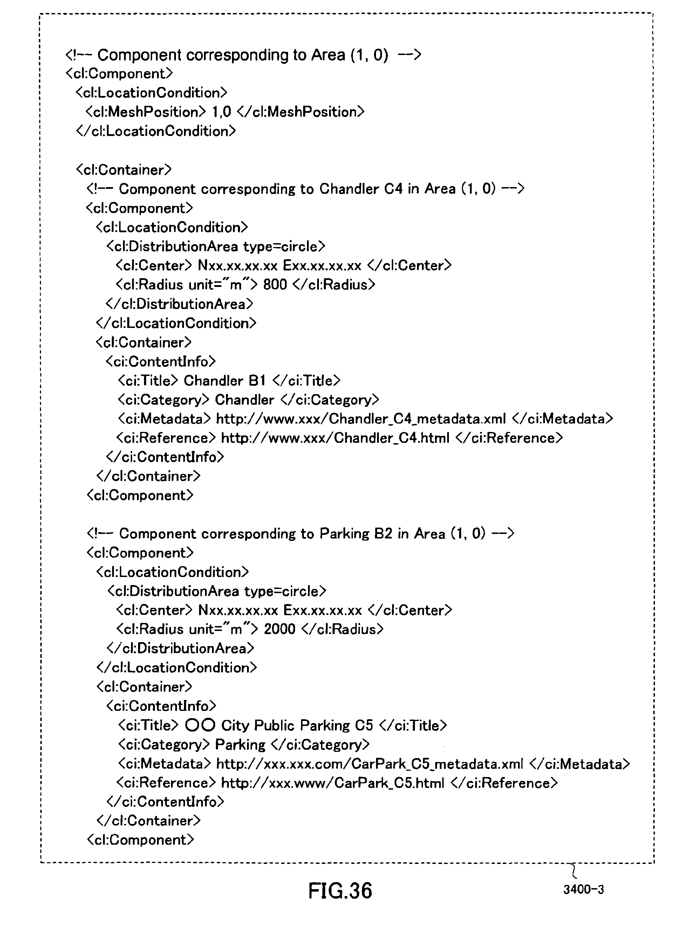

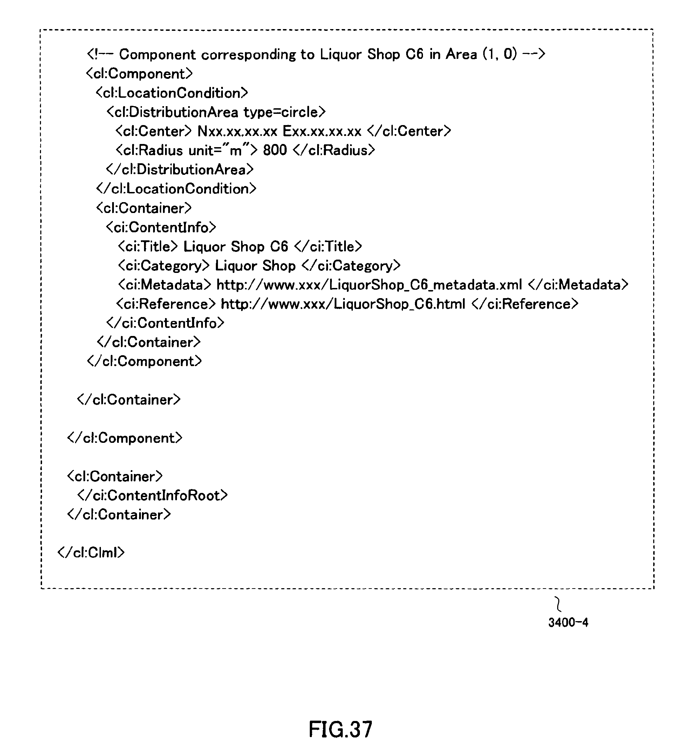

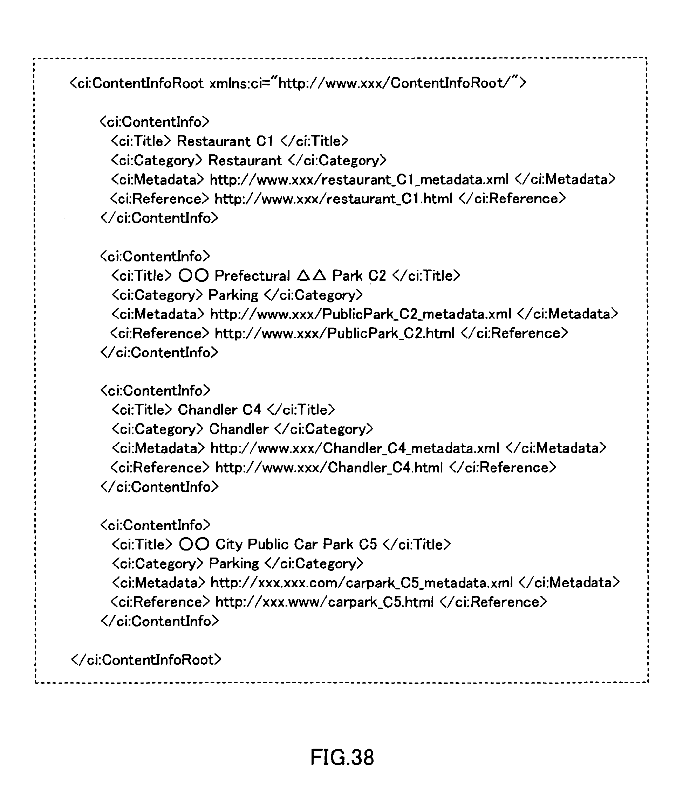

FIG. 34 through FIG. 37 also show list content corresponding to FIG. 26. In this list content, location-dependent content metadata is written by means of a ContentInfo element in a Container element within a Component element corresponding to a content information block. When the ROI shown in FIG. 26 and condition (3) in FIG. 27 are applied to this list content, the content generated in FIG. 38 is generated. This content is local region list content and does not contain any CLML tags.

Content receiving terminal 104 location adaptive processing has been described above while showing actual examples of list content using CLML.

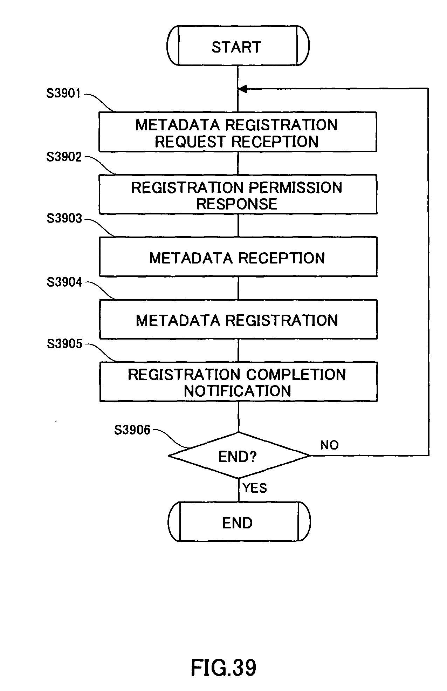

Next, the actual operation of content broadcasting server 101 and content receiving terminal 104 will be described with reference to FIG. 39 through FIG. 49.

First, the operation of content broadcasting server 101 will be described with reference to flowcharts in FIG. 39 through FIG. 41.

FIG. 39 is a flowchart showing the meta-information content collection processing of content broadcasting server 101. Content broadcasting server 101 collects location-dependent content metadata, that is, meta-information content from general Web servers 103 existing on the internet. Possible meta-information content collection methods are (1) passively acquiring meta-information content transmitted from general Web servers 103, and (2) installing a robotic search engine, searching for general Web servers, and acquiring content information actively. In this embodiment, method (1) is used. The meta-information content format is assumed to conform to the format shown in FIG. 7.

The meta-information content collection processing in FIG. 39 is executed by meta-information content collecting section 202 of content broadcasting server 101. First, in step S3901, meta-information content collecting section 202 receives a metadata registration request from a general Web server 103. If there is no metadata registration request in this step, meta-information content collecting section 202 stands by in a reception wait state, and proceeds to the next step when a metadata registration request is received.

In step S3902, meta-information content collecting section 202 confirms the contents of the metadata registration request, and returns a response reporting the registration result to the metadata registration request transmission source. A metadata registration request contains information that need not or should not be included in location-dependent content metadata, such as contract details between the content broadcasting server 101 operator and general Web server operator. In this step, meta-information content collecting section 202 confirms the contents of the metadata registration request, decides whether to allow or deny metadata registration, and returns a response to general Web server 103.

S3903 is the metadata reception processing step. In this step, meta-information content collecting section 202 receives meta-information content transmitted by general Web server 103 to which metadata registration permission was conveyed in S3902.

S3904 is the metadata registration processing step. In this step, meta-information content collecting section 202 confirms the contents of the meta-information content received in S3903, and then stores the meta-information content in storage section 207. Meta-information content that does not conform to a predetermined format is not stored in storage section 207.

S3905 is the metadata registration completion notification step. In this step, meta-information content collecting section 202 reports the result of metadata registration processing in S3904 to general Web server 103 that transmitted the metadata.

S3906 is the meta-information content collection processing termination determination step. In this step, meta-information content collecting section 202 determines whether meta-information content collection is to be continued or terminated. If collection is to be continued, the processing flow returns to S3901 and the series of processing steps is repeated. Any collection termination condition may be used.

Meta-information content collecting section 202 collects a large amount of meta-information content from general Web server 103 by executing steps S3901 through S3906. Any methods may be used as the metadata registration request receiving method and metadata receiving method. For example, content broadcasting server 101 may publish a Web page for data registration and an administrator of a general Web server may register meta-information content using the registration Web page. Also, steps S3201 and S3202 in the flowchart in FIG. 39 may be omitted, and meta-information content may be received directly.

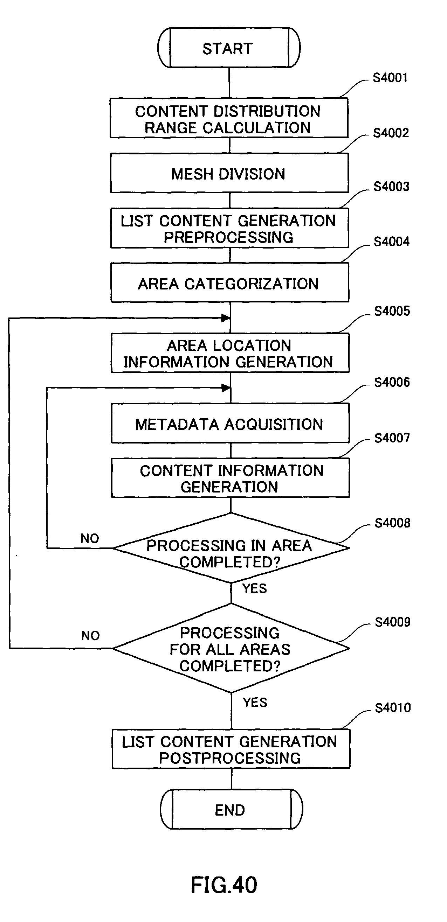

Next, list content generation processing by content broadcasting server 101 will be described. List content generation processing is executed by list content generation section 203 of content broadcasting server 101. This list content generation processing is a process that generates list content from meta-information content collected from general Web servers 103, and is executed periodically according to the collecting situation of the meta-information content. In list content generation processing, for example, data is output to a file for each area information block or each content information block, and finally list content with a dual Component element structure as shown in FIG. 21 is generated, and the generated list content is stored in storage section 207. FIG. 40 is a flowchart showing list content generation processing.

In FIG. 40, parameters required for list content generation are determined in S4001 and S4002.

S4001 is content distribution range calculation processing. In this step, list content generation section 203 analyzes meta-information content stored in storage section 207. Meta-information content includes data indicating geographical location information for location-dependent content. In the case of the meta-information content shown in FIG. 7, the Coordinate element (comprising latitude and longitude coordinate values) included in Location element 705 is such data. List content generation section 203 extracts data indicating the location of location-dependent content from all meta-information content relating to list content generation, and finds a rectangular area including all these data. In this embodiment, the latitude and longitude coordinate system approximates an orthogonal coordinate system, and a rectangle is determined that is composed of lines parallel to lines of latitude or lines of longitude. Here, it is assumed that a content distribution region is defined by the latitude and longitude coordinates of the top-left and bottom-right vertices of a rectangle.

S4002 is the mesh area division processing step. In this step, list content generation section 203 divides the content distribution region decided in S4001 into a mesh shape. In this embodiment, the mesh base unit is assumed to be a rectangle.

S4003 is a step in which list content generation preprocessing is performed. Here, preprocessing refers to processing that outputs information to be written at the beginning of an XML document, such as a list content XML declaration or Namespace declaration, and a mesh area definition written by means of a MeshAreaDef element. In this step, list content generation section 203 outputs information to be written before the first area information block to the list content.

S4004 is metadata area categorization processing. In this step, list content generation section 203 distributes all meta-information content relating to list content generation to the mesh (= geographical content areas) set in S4002. That is to say, geographical location information written in each meta-information content is referenced, it is determined to which geographical content area location-dependent content belongs, and meta-information content is categorized on an area-by-area basis.

When geographical location information for location-dependent content is defined as a point of content (POC), the location-dependent content belongs to a unique area. On the other hand, when geographical location information for location-dependent content is defined as a region of content (ROC), the region of content (ROC) may overlap with a plurality of areas. In such a case, multiple categorization of that location-dependent content is performed for all areas overlapping the ROC. By so doing, it is possible to avoid location-dependent content that has a region of content (ROC) from being omitted from content search results in area information block selection processing executed by content receiving terminal 104.

The loop processing from S4005 through S4009 in FIG. 40 is processing that generates an area information block. This corresponds to the processing that creates an outer Component element of the list content shown in FIG. 21. Execution of this loop processing is repeated a number of times equal to the number of mesh base units defined in S4002.

S4005 is the area location information generation processing step. In this step, list content generation section 203 outputs area location information of area information block (930 in FIG. 9) to the list content. In this embodiment, when setting geographical content areas as shown in FIG. 4, for example, area information blocks are output in the following order: area (0, 0), area (0, 1), ..., area (2, 2), area (3, 2) . Area location information output in this step is described by means of a LocationCondition element.

The loop processing from S4006 through S4008 in FIG. 40 is processing that generates a content information block. This corresponds to the processing that creates an inner Component element of the list content shown in FIG. 21. Execution of this loop processing is repeated a number of times equal to the number of items of location-dependent content included in the area defined in S4005.

S4006 is the metadata acquisition processing step. In this step, list content generation section 203 selects one meta-information content belonging to the geographical content area specified in S4005. At this time, if all meta-information content is selected in the loop processing from S4006 through S4008, the order of meta-information content selection is immaterial.

S4007 is content information generation processing. In this step, list content generation section 203 outputs a content information block relating to meta-information content selected in S4006 to the list content. A content information block output in this step is described by means of a Component element, and geographical location information described by means of a LocationCondition element and content information described by means of a Container element are included therein. Also, at least network location information (specifically, a URL indicating the location of location-dependent content) is included in a content information block.

S4008 is a step in which completion of content information block output is determined. In this step, list content generation section 203 determines whether or not processing has been performed for all metadata belonging to the geographical content area specified in S4005. If there is unprocessed meta-information content, list content generation section 203 repeats processing steps S4006 through S4008 after returning to S4006; if there is no unprocessed meta-information content, the processing proceeds to the next step.

S4009 is a step in which completion of area information block output is determined. In this step, list content generation section 203 determines whether or not processing has been performed for all geographical content areas set in the content distribution region. If there is an unprocessed geographical content area, list content generation section 203 repeats processing steps S4005 through S4009 after returning to S4005; if there is no unprocessed geographical content area, the processing proceeds to the next step.

S4010 is a step in which list content generation post-processing is performed. In this step, list content generation section 203 outputs information to be written after the last area information block (for example, a CLML end tag) to the list content. Lastly, list content generation section 203 stores the generated list content in storage section 207.

When list content generation section 203 executes steps S4001 through S4010, list content that has the kind of structure shown in FIG. 20 is generated. Actual details of timing of CLML tag output are not shown in the flowchart in FIG. 40. The flowchart in FIG. 40 assumes that the kind of list content shown in FIG. 34 through FIG. 37 is generated. To generate list content that incorporates HTML elements as shown in FIG. 28 through FIG. 30, the flowchart in FIG. 40 needs to be slightly modified. For example, a Container element containing an HTML tag necessary for HTML content generation is output in the preprocessing in S4003 and the post-processing in S4010, and network location information described by means of an HTML Anchor element is output in the content information generation processing in S4007.

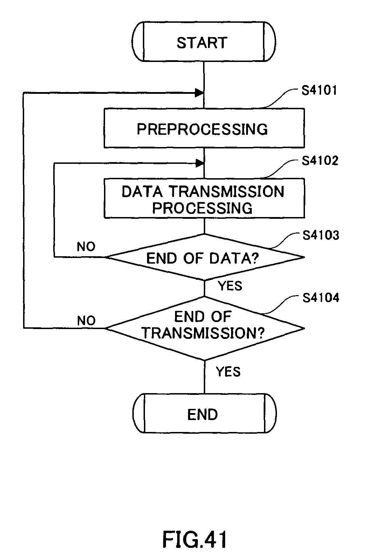

Next, list content distribution processing by content broadcasting server 101 will be described. List content distribution processing is executed by list content distribution section 205 of content broadcasting server 101. This list content distribution processing distributes list content generated by list content generation section 203 to content receiving terminals 104 by means of carousel data broadcasting. FIG. 41 is a flowchart showing distribution processing of list content by content broadcasting server 101.

S4101 is list content distribution preprocessing. In this step, list content distribution section 205 executes processing necessary to start data broadcasting, such as reading list content from storage section 207 and setting a data transmission schedule.

The processing loop composed of steps S4102 and S4103 corresponds to processing that actually distributes list content by means of carousel data broadcasting. In actual data broadcasting, a plurality of items of content are distributed in multiplexed form. That is to say, in S4102 and S4103, list content distribution section 205 repeats transmission of list content divided into predetermined units until the end of list content is reached.

Unless the end of transmission is detected in S4104, list content distribution section 205 repeats list content distribution processing after returning to S4101 .

In this way, content broadcasting server 101 generates list content that has the structure shown in FIG. 21 from meta-information content collected from general Web servers 103, and distributes list content to content receiving terminals 104.

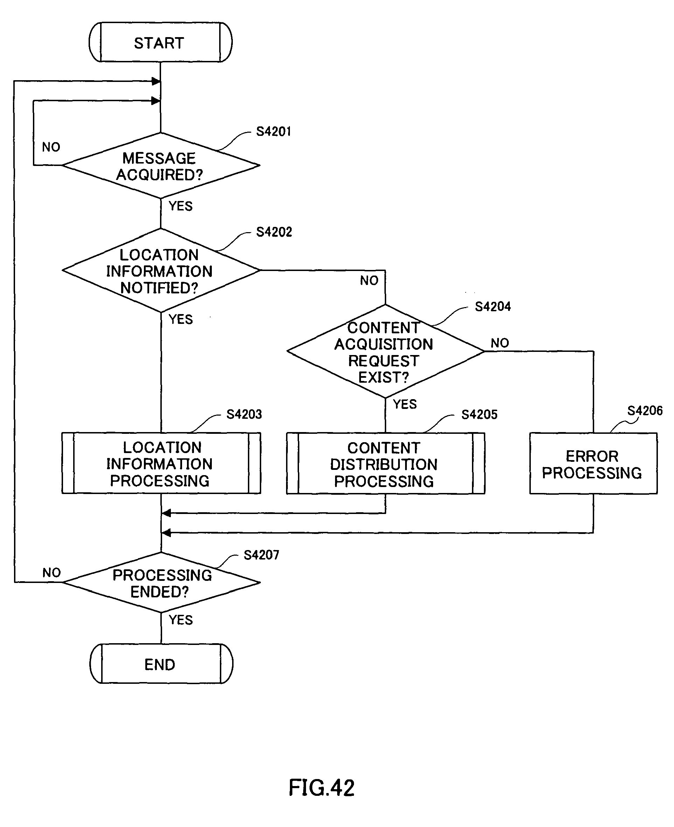

The operation of a content receiving terminal 104 will now be described with reference to the flowcharts in FIG. 42 through FIG. 49. The following description will focus on content processing section 303 of content receiving terminal 104.

First the message processing procedure in content processing section 303 of content receiving terminal 104 will be described with reference to FIG. 42. FIG. 42 is a flowchart showing the message processing procedure in content processing section 303 according to this embodiment. In the message processing shown in FIG. 42, content processing section 303 processes a message conveyed frombrowser section 304 or control section 306, executing location information processing or content distribution processing according to the type of message.

Content processing section 303 waits for reception of a message from browser section 304 or control section 306 (S4201). If it is determined that a message has been received in S4201, content processing section 303 proceeds to the next step. A message received by content processing section 303 may be an HTTP GET message, an extended HTTP message reporting location information, or an extended HTTP message requesting broadcast reception.

Content processing section 303 then analyzes the received message, and determines whether or not that message is a message reporting location information (S4202). Content processing section 303 proceeds to location information processing in S4203 if the message is a message reporting location information, or proceeds to S4204 if the message is of a different kind.

In S4203, content processing section 303 executes location information processing. When this processing ends, content processing section 303 proceeds to the next step, S4207. Here, location information processing is processing for location information reported from control section 306. Location information processing will be described in detail later herein.

In S4204, content processing section 303 analyzes the received message, and determines whether or not that message is a message requesting content distribution (an HTTP GET message or an extended HTTP message requesting broadcast reception). If the received message is a content distribution request, content processing section 303 executes content distribution processing in S4205 and then proceeds to S4207. On the other hand, if the received message is an invalid message other than a content distribution request, content processing section 303 proceeds to S4206 and executes appropriate error processing.

Here, content distribution processing is processing that receives specified content from a server and distributes the received content to browser section 304. In this content distribution processing, content adaptive processing is executed as necessary. Content distribution processing will be described in detail later herein.

In the final step, S4207, processing termination determination is performed. That is to say, unless there is a direction terminating message processing, content processing section 303 continues message processing after returning message reception wait loop in S4201.

Thus, content processing section 303 repeatedly executes location information processing or content distribution processing according to the type of message reported from browser section 304 or control section 306.

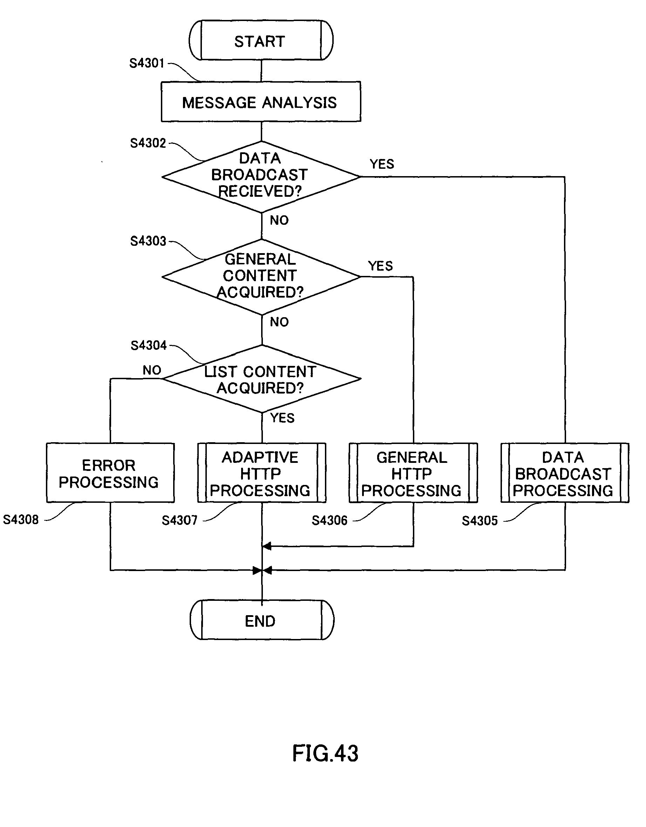

Content distribution processing by content processing section 303 will be described using FIG. 43. FIG. 43 is a flowchart showing content distribution processing by content processing section 303 according to this embodiment.

In the content distribution processing in FIG. 43, content processing section 303 performs distribution relay processing according to the type of content. In the case of list content for which location adaptive processing is possible, content processing section 303 executes location adaptive processing (= location adaptive filtering processing) on list content acquired from a server, and then transmits the list content to browser section 304 or control section 306. On the other hand, if the content type is general HTML content, an image file, or the like, content processing section 303 transmits content received from a server directly to browser section 304.

First, content processing section 303 performs analysis of the received message (S4301) . Then, in S4302 through S4304, content processing section 303 allots the processing to be executed according to the type of receiving message.

In S4302, content processing section 303 extracts a message requesting broadcast reception, and executes data broadcast processing in S4305. In S4305, content processing section 303 acquires list content distributed by content broadcasting server 101. However, list content may also be distributed by a content communication server 102.

In S4303, content processing section 303 extracts a message requesting acquisition of general content, and executes general HTTP processing in S4306. Here, general content refers to a data file composed of general HTML content, such as an HTML file or image file, which can be identified by its extension.

In S4304, content processing section 303 extracts a message requesting acquisition of list content, and orders execution of adaptive HTTP processing in S4307. List content is content for which adaptive processing is possible, written in CLML, and which can be identified by its file extension.

If an invalid message is received, content processing section 303 executes appropriate error processing in S4308.

Thus, by means of processing allotment of content processing section 303, data broadcast processing (S4305), general HTTP processing (S4306), or adaptive HTT processing (S4307) is executed according to the type of content.

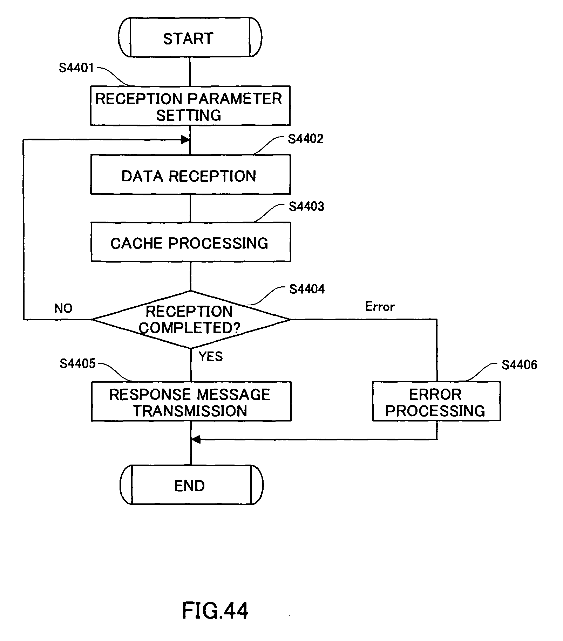

Next, list data broadcast processing corresponding to S4305 in FIG. 43 will be described. Content broadcasting server 101 can distribute any content including list content by means of data broadcasting. FIG. 44 is a flowchart showing data broadcast processing by content processing section 303 according to this embodiment.

In data broadcast processing, content processing section 303 temporarily stores content received from content broadcasting server 101, and reports a URL (or filename) indicating the temporarily stored content to control section 306.

First, content processing section 303 acquires broadcast reception parameters from a message received from control section 306 (S4401). Here, broadcast reception parameters are information necessary for broadcast reception, such as the reception channel and program identifier.

Then, in S4402 through S4404, content processing section 303 receives a carousel data broadcast, and stores content contained in the specified channel in storage section 305. A carousel data broadcast is periodically repeated data file distribution, and reception and storage processing is not necessarily begun from the start of a file. Thus, data is received by content processing section 303 on a predetermined unit basis (S4402) in accordance with the data broadcast format specifications, and processing to temporarily store the receive data while concatenating it (S4403) is repeated until all the content has been received (S4404).

When data reception is completed in S4404, content processing section 303 proceeds to the next processing step, S4405. However, if data reception has not been executed correctly, error processing is executed in S4406 and data broadcast processing is terminated.

In the next step, S4405, content processing section 303 generates a response message in response to the broadcast reception message, and transmits this message to control section 306. This response message contains the URL (or filename) of content stored in storage section 305. Content processing section 303 stores this filename for general HTTP processing to be executed later.

By executing the processing in steps S4401 through S4406 described above, the URL (or filename) of content received from a data broadcast and stored in storage section 305 is reported from content processing section 303 to control section 306. By means of this data broadcast processing, content receiving terminal 104 acquires list content distributed by content broadcasting server 101. Also, by means of general HTTP processing executed later, content (= broadcast content) stored in storage section 305 is distributed from content processing section 303 to browser section 304.

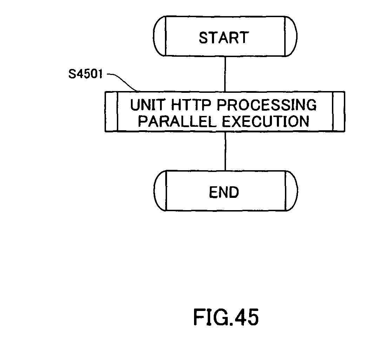

Next, general HTTP processing corresponding to S4306 in FIG. 43 will be described. FIG. 45 is a flowchart showing general HTTP processing by content processing section 303 according to this embodiment.

This flowchart comprises only one step, S4501. In S4501, content processing section 303 performs parallel execution of unit HTTP processing. In general HTTP processing, content processing section 303 acquires a data file comprising HTML content (an HTML file, GIF file, JPEG file, or the like) from a content communication server 102 by means of HTTP, and distributes the acquired data file to browser section 304 by means of HTTP.

This general HTTP processing is executed each time a content acquisition request message is transmitted from browser section 304, but need not be completed in the order in which content acquisition request messages are received. Thus, on receiving a content acquisition request message, content processing section 303 starts unit HTTP processing to handle that message. This means that, when a plurality of content acquisition request messages are received in a short period, a situation arises in which a plurality of unit HTTP processes are executed in parallel. Individual unit HTTP processing is completed when content distribution to browser section 304 is executed.

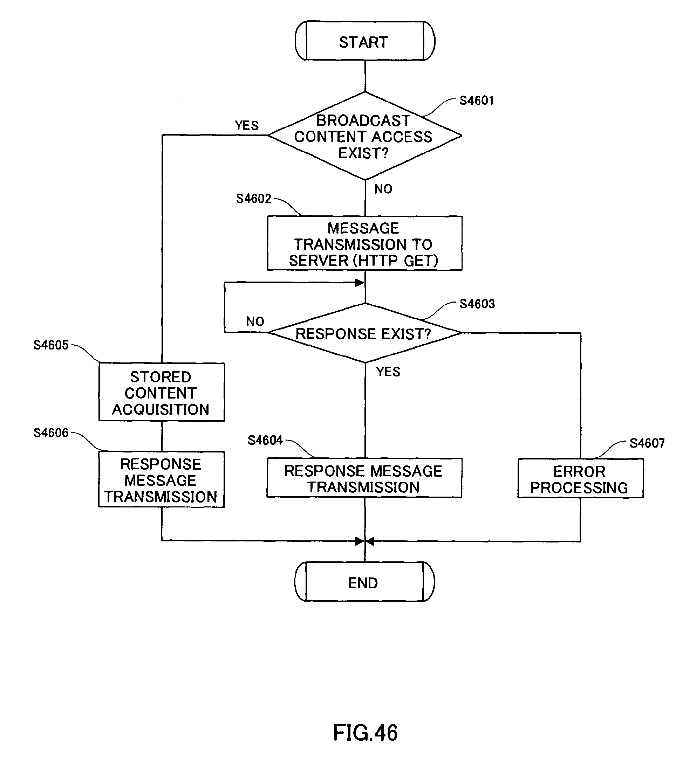

Next, unit HTTP processing corresponding to S4501 in FIG. 45 will be described. FIG. 46 is a flowchart showing unit HTTP processing by content processing section 303 according to this embodiment. In this unit HTTP processing, HTTP communication relay processing or cache content distribution processing is executed in accordance with an HTTP GET message (content acquisition request) transmitted from browser section 304.

In S4601, content processing section 303 analyzes the received HTTP GET message and decides on the processing that should be executed. Specifically, content processing section 303 compares the URL string contained in the GET message with a URL string stored in S4405 of the data broadcast reception processing in FIG. 44. If the two URLs match, content processing section 303 can transmit content (received from a broadcast) already stored in storage section 305, and therefore proceeds to S4605. On the other hand, if the two URL strings do not match, content processing section 303 must acquire content from content communication server 102, and therefore proceeds to S4602.

In S4602 through S4604, content processing section 303 performs relay transformation of the HTTP GET message.

Content processing section 303 references the received content acquisition request message, and generates a message to transmit to content communication server 102. This message is an HTTP GET message making a content acquisition request to the server. Then content processing section 303 transmits the generated message to the appropriate content communication server 102 (S4602).

In S4603, content processing section 303 waits for a response to the HTTP GET message transmitted to the server, and on receiving a response, proceeds to the next step, S4604. If an invalid message is received, or if a response is not received after a predetermined time has elapsed, content processing section 303 performs appropriate error processing in S4607 and completes unit HTTP processing.

In S4604, content processing section 303 transfers the response message received from the server in S4603 to the transmitter of the content acquisition request message.

In S4605 through S4606, content processing section 303 executes cache content distribution processing. Content processing section 303 reads content received from content broadcasting server 101 from storage section 305 (S4605), generates a response message containing this content, and transmits the generated response message to browser section 304 (S4606).

Thus, in unit HTTP processing according to this embodiment, HTTP communication relay processing or cache content distribution processing is performed according to the URL contained in an HTTP GET message.

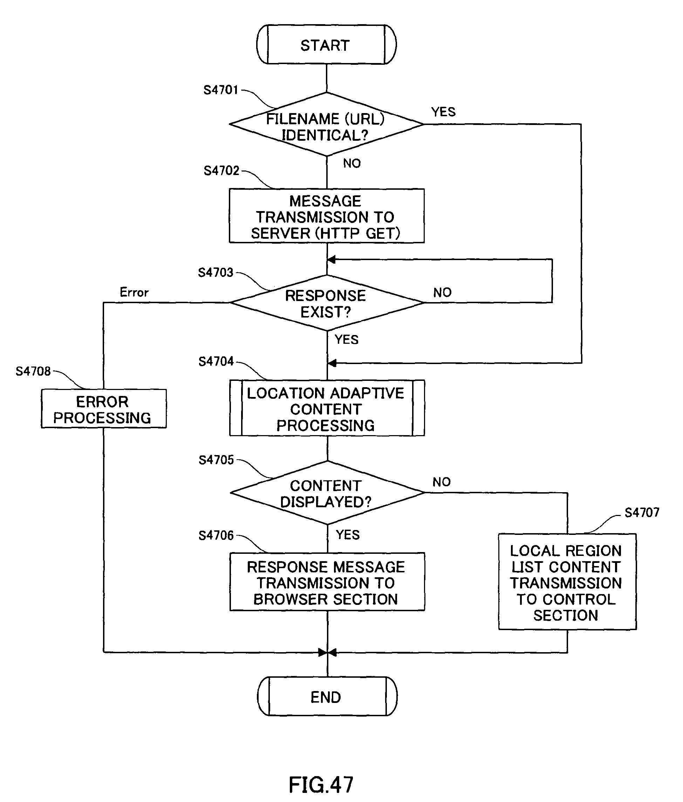

Next, adaptive HTTP processing corresponding to S4307 in FIG. 43 will be described. In adaptive HTTP processing, content processing section 303 executes location adaptive processing when relay transfer of list content is performed. FIG. 47 is a flowchart showing adaptive HTTP processing by content processing section 303 according to this embodiment.

In S4701, content processing section 303 checks whether or not the URL of the list content to be acquired matches the URL of the list content cached in storage section 305. If the cached list content and the list content being acquired are the same, the list content cached in storage section 305 can be used, and therefore content processing section 303 skips S4702 and S4703 and proceeds to S4704. On the other hand, if the list content has not been cached, content processing section 303 proceeds to the next step, S4702.

In this embodiment, list content is described as being distributed by content broadcasting server 101. That is to say, list content has been stored in storage section 305 by the data broadcast reception processing in FIG. 44, and therefore S4702 and S4703 are skipped. On the other hand, if list content not stored in storage section 305 is to be acquired, this means that the list content will be acquired from content communication server 102, and therefore S4702 and S4703 are executed.

In S4702, content processing section 303 references the received content acquisition request message, generates a message to be transmitted to content communication server 102, and transmits this message. This message is an HTTP GET message making a content acquisition request to the server.

In S4703, content processing section 303 waits for a response to the message transmitted to the server in S4702, and on receiving a response, proceeds to the next step, S4704. If an invalid message is received, or if a response is not received after a predetermined time has elapsed, content processing section 303 performs appropriate error processing in S4708 and completes adaptive HTTP processing.

In S4704, content processing section 303 executes location adaptive content processing. Location adaptive content processing generates local region list content from list content acquired from content communication server 102 or read from storage section 305 based on previously provided location information (more specifically, parameters defining the region of interest (ROI)). Location adaptive content processing will be described in detail later herein. When the processing in this step ends, content processing section 303 proceeds to the next step, S4705.

In S4705, content processing section 303 determines whether or not the local region list content generated in S4704 is content that can be displayed by the browser. Here, content that can be displayed by the browser is the HTML content in FIG. 31 through FIG. 33 generated from the CLML list content in FIG. 28 through FIG. 30, and content that cannot be displayed by the browser is the local region list content in FIG. 38 generated from the CLML list content in FIG. 34 through FIG. 37. Content processing section 303 proceeds to S4706 in the case of content that can be displayed by the browser, or to S4707 in the case of content that cannot be displayed by the browser.

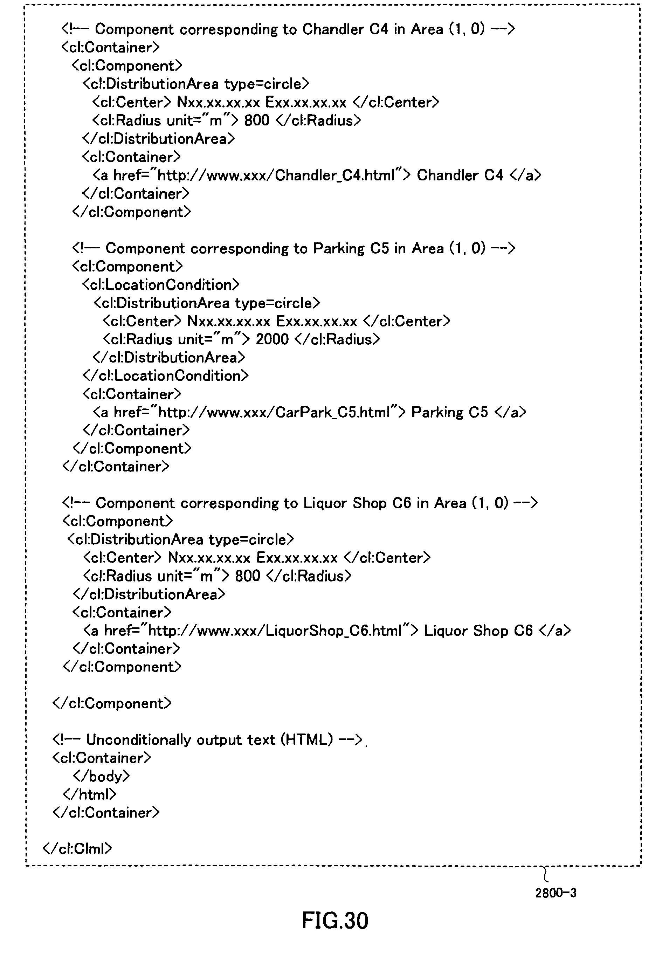

In S4706, content processing section 303 generates a response message in response to a content acquisition request message (HTTP GET message), and transmits the generated message to browser section 304. This response message contains HTML content generated from CLML list content in S4704, and when this is acquired by browser section 304, information relating to content for the current locality such as shown in FIG. 6 is displayed. Then, when the user selects one information item displayed by browser section 304, content processing section 303 executes the general HTTP processing shown in FIG. 30, and location-dependent content selected by the user is displayed by browser section 304.

In 54707, content processing section 303 transmits local region list content to control section 306. Local region list content is content in which the kind of content shown in FIG. 38 is listed, and this cannot be displayed directly by the browser. Control section 306 performs analysis of the local region list content, and selects one content information item from the content information contained in the local region list content in accordance with predetermined rules. For example, when content category is written in content information, control section 306 selects content information that matches the category specified by the user via GUI section 309, and transfers the URL included in that content information to browser section 304. Browser section 304 then acquires the content of the specified URL, and displays this content. In S4707, content processing section 303 may convert local region list content to content that can be displayed by the browser, and transmit this to browser section 304.

Thus, in adaptive HTTP processing, content processing section 303 executes content adaptive processing that generates local region list content from list content written in CLML.

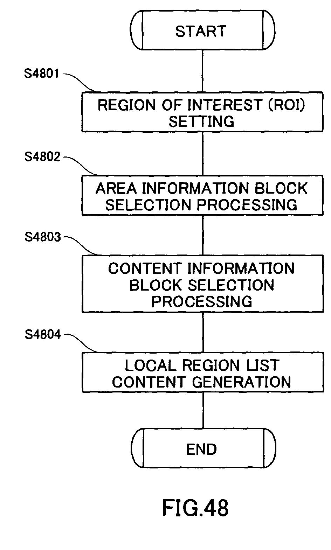

Next, the location adaptive content processing procedure executed in S4704 in FIG. 47 will be described. In location adaptive content processing, the latest location information is referenced and local region list content is generated from CLML list content. FIG. 48 is a flowchart showing the location adaptive content processing procedure executed by content processing section 303 according to this embodiment.

In S4801, content processing section 303 references location information that has previously been acquired (from location information acquisition section 307 or map processing section 308), and sets a region of interest (ROI). Here, location information comprises latitude and longitude coordinate values indicating the current location or search point of content receiving terminal 104. Content processing section 303 takes the acquired location information as a point of interest (POI), and sets a region of interest (ROI) with this POI at its center. If location information has not been acquired, content processing section 303 terminates location adaptive content processing.

In S4802, content processing section 303 references a mesh area definition contained in list content, identifies an area that has a relationship with the region of interest (ROI), and selects an area information block corresponding to that area. Area location information is written in a LocationCondition element of the area information block. From this area location information and the mesh area definition, the location and shape of the mesh corresponding to that area information block can be found. In the case of list content that has no mesh area definition, the LocationCondition element of each area information block is analyzed directly, and an area information block that has a relationship with the region of interest (ROI) is selected. More specifically, content processing section 303 selects an area information block that has a mesh overlapping the region of interest (ROI).

In S4803, content processing section 303 takes the area information block selected in S4802 as subject to processing, and selects a content information block that has a relationship with the point of interest (POI) or region of interest (ROI). Geographical location information corresponding to content information contained in that content information block is written in a LocationCondition element of that content information block. This geographical location information corresponds to a point of content (POC) or region of content (ROC). Content processing section 303 selects a content information block from the area information block based on one of the three kinds of content information block selection conditions shown in FIG. 27.

In S4804, content processing section 303 generates local region list content from list content based on the result of the selection process of content information block in S4803. Local region list content comprises content information contained in a Container element of the selected content information block. However, if the generated local region list content is content that can be displayed by the browser, a Container element that does not have a LocationCondition element is included in the list content. This Container element contains description (for example, an html element and so forth) necessary for generating content that can be displayed by the browser.

That is to say, content processing section 303 generates local region list content taking into consideration not only the selected content information but also a Container element that is a CLML element subelement or a subelement of the selected area information block.

Thus, by means of the location adaptive content processing in FIG. 48, local region list content adapted to a point of interest (POI) or region of interest (ROI) and a point of content (POC) or region of content (ROC) is generated from list content written in CLML.

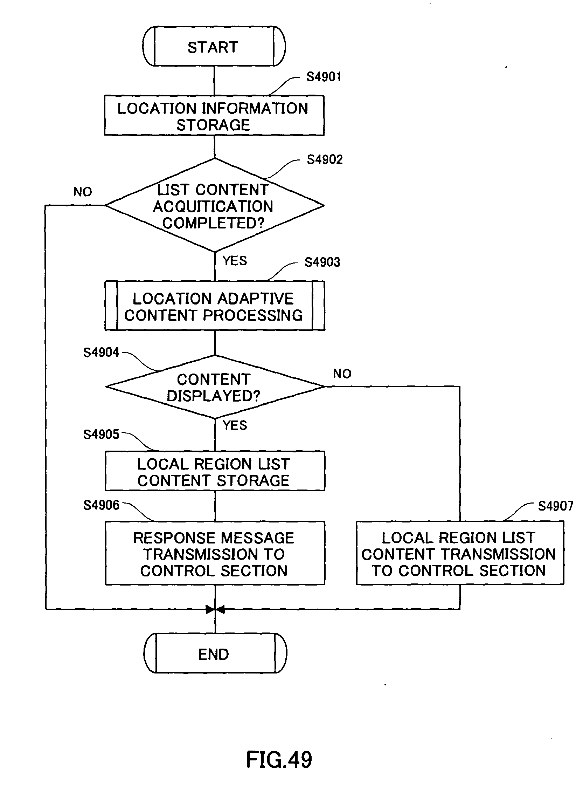

Next, the location information processing procedure executed in S4203 in FIG. 42 will be described using FIG. 49. In this location information processing, location adaptive content processing is executed for acquired list content based on the latest location information. FIG. 49 is a flowchart showing the location information processing procedure according to this embodiment.

In S4901, content processing section 303 stores the latest location information. Here, location information comprises latitude and longitude coordinate values indicating the current location or search point of content receiving terminal 104.

In S4902, content processing section 303 confirms whether or not list content has already been acquired.

If list content has not been acquired, content processing section 303 terminates location information processing. If list content has been acquired, content processing section 303 proceeds to the next step, S4903.

In S4903, content processing section 303 executes the location adaptive content processing shown in FIG. 48. Here, the latest location information is referenced, and local region list content is generated from acquired list content.

In S4904, content processing section 303 determines whether or not the local region list content generated in S4903 is content that can be displayed by the browser. Content processing section 303 proceeds to S4905 in the case of content that can be displayed by the browser, or to S4907 in the case of content that cannot be displayed by the browser.

In S4905, content processing section 303 stores local region list content generated in S4903 in storage section 305. Local region list content stored in storage section 305 is content that can be displayed by browser section 304.

In S4906, content processing section 303 generates a response message in response to a location information notification, and transmits the generated message to control section 306. This response message contains the URL (or filename) of the local region list content stored in storage section 305 in S4904. On receiving this response message, control section 306 transfers the URL extracted from the response message to browser section 304. On acquiring the URL, browser section 304 displays the content indicated by that URL. In this way, the local region list content generated in S4903 is displayed by browser section 304.

In S4907, content processing section 303 transmits local region list content to control section 306. Local region list content is content in which the kind of content shown in FIG. 38 is listed, and this cannot be displayed directly by the browser. Control section 306 performs analysis of the local region list content, selects one content information item from the content information contained in the local region list content in accordance with predetermined rules, and transfers the URL included in that content information to browser section 304. Browser section 304 then displays the location-dependent content corresponding to the specified URL.

Thus, in the location information processing shown in FIG. 49, content processing section 303 generates local region list content from list content each time a new location information notification is received, and reports the result to control section 306.

As described above, according to this embodiment, a content distribution apparatus collects meta-information content from a server that has location-dependent content, which is content assigned correspondence to geographical location information, and meta-information content including geographical location information indicating the geographical location of location-dependent content and network location information, which is the link destination of location-dependent content, and then divides a geographical distribution region of location-dependent content into mesh-shaped areas based on geographical location information of meta-information content, and generates a content information block in which geographical location information is added to content information including network location information as an index, and furthermore, generates an area information block in which area location information defining the location and shape of an area is added to a collection of content information blocks on an area-by-area basis as an index, and generates list content that has a structure in which area information blocks are listed.

By this means it is possible, with regard to content assigned correspondence to location information, to distribute to a terminal a content list in which content metadata is organized hierarchically based on location information. As a result, a user can be provided with a content distribution environment in which it is possible to search for content efficiently according to geographical location conditions.

Also, according to this embodiment, a content distribution apparatus represents the location and shape of an area by means of a mesh area definition and mesh index number. By this means, the amount of data description of a content list can be reduced, and a content receiving terminal can be provided with a content list whereby it is possible for the content search range to be narrowed down simply be referencing a mesh area definition, without analyzing the entire list.

Furthermore, according to this embodiment, a content receiving apparatus receives list content that has a structure in which area information blocks are listed to which area location information defining the location and shape of an area has been added as an index in a content information block in which are collected for each geographical area content information blocks to which geographical location information is added as an index to content information including network location information that is the link destination of location-dependent content, which is content assigned correspondence to geographical location information indicating a geographical location, and then sets a content geographical search condition based on point location information indicating the current point or a search point, and narrows down area information blocks subject to searching by comparing that search condition with area definition information, and furthermore compares the search condition with geographical location information, thereby making it possible to generate local region list content comprising a list of content information that matches the search condition from the list content. In this way, a content receiving terminal performs hierarchical content search processing whereby an area subject to searching is limited based on a geographical search condition and only content within that area is searched, thereby enabling the response time for a user's content search to be improved.

Moreover, according to this embodiment, when a content receiving terminal receives list content that has a mesh area definition, the content receiving terminal does not analyze the entire list content but references the mesh area definition, narrows down area information blocks comprising a content search range, and generates local region list content. By this means, the time required for search processing can be shortened.

A mode is also possible whereby the processing performed by content receiving terminal 104 is made a program that is stored in a storage medium readable by a general-purpose computer, and this program is executed by a general-purpose computer that has a communication function, broadcast receiving function, and location information acquisition function.

This application is based on Japanese Patent Application No. 2003-140651 filed on May 19, 2003, entire content of which is expressly incorporated by reference herein.

### Industrial Applicability

As described above, according to this invention, a content distribution environment can be provided in which it is possible, with regard to content assigned correspondence to a geographical point or region, to extract efficiently information of content limited to a user's region of interest using a content list in which content metadata is organized hierarchically based on location information.

## Claims

1. A content distribution apparatus comprising:
a meta-information content collecting section that collects meta-information content from a server that has location-dependent content, which is content assigned correspondence to geographical location information, and the meta-information content including geographical location information indicating a geographical location of the location-dependent content and network location information that is a link destination of the location-dependent content;
a list content generation section that divides a geographical distribution region of the location-dependent content into mesh-shaped areas based on the geographical location information of the meta-information content, generates a content information block in which the geographical location information is added to content information including the network location information as an index, collects together the content information blocks for each area, generates an area information block in which area location information defining a location and shape of area is added thereto as an index, and generates list content having a structure wherein the area information blocks are listed; and
a list content distribution section that distributes the list content.

2. The content distribution apparatus according to claim 1, wherein said list content generation section adds a mesh area definition stipulating a mesh division method of the distribution region, and the area location information is described by a mesh index number that can be calculated from the mesh area definition.

3. The content distribution apparatus according to claim 1, wherein the geographical location information is information combining any of a content representative point indicating a geographical representative point relating to the location-dependent content, a content existing region indicating a geographical region relating to the location-dependent content, and a content distribution region indicating a geographical distribution range of the location-dependent content.

4. The content distribution apparatus according to claim 3, wherein the meta-information content and the content information include category information that indicates a category of the location-dependent content.

5. A content receiving apparatus comprising:
a content receiving section that receives list content that has a structure in which are collected together for each geographical area content information blocks to which the geographical location information is added as an index to content information including network location information that is a link destination of location-dependent content that is content assigned correspondence to geographical location information indicating a geographical location, and area information blocks are listed in which area location information defining a location and shape of area has been added as an index thereto;
a location information acquisition section that acquires point location information indicating a current point or search point; and
a content processing section that sets a content geographical search condition based on the point location information, and narrows down the area information blocks subject to searching by comparing the search condition with the area definition information, and furthermore compares the search condition with the geographical location information, thereby generating local region list content comprising a list of the content information that matches the search condition from the list content.

6. The content receiving apparatus according to claim 5, wherein the list content has a mesh area definition that defines a method of dividing a geographical distribution region of the location-dependent content into a mesh shape;
the area location information is described by a mesh index number that can be calculated from the mesh area definition; and
said content processing section references the mesh area definition, narrows down the area information blocks subject to searching by finding the mesh index number of a mesh area that matches the search condition, and generates the local region list content from the list content by comparing the search condition with the geographical location information.

7. The content receiving apparatus according to claim 6, wherein the search condition is a point of interest indicating a point in geographical space set based on the point location information, or a region of interest indicating a region in geographical space set based on the point location information.

8. The content receiving apparatus according to claim 6, wherein the geographical location information is information combining any of a content representative point indicating a geographical representative point relating to the location-dependent content, a content existing region indicating a geographical region relating to the location-dependent content, and a content distribution region indicating a geographical distribution range of the location-dependent content.

9. The content receiving apparatus according to claim 8, wherein said content processing section generates the local region list content containing only the content information for which the content representative point is included in the region of interest.

10. The content receiving apparatus according to claim 8, wherein said content processing section generates the local region list content containing only the content information for which the point of interest is included in the content distribution region.

11. The content receiving apparatus according to claim 8, wherein said content processing section generates the local region list content containing only the content information for which the region of interest overlaps with the content existing region or the content distribution region.

12. The content receiving apparatus according to claim 8, further comprising:
a content selection section that references metadata of the location-dependent content written in the content information included in the local region list content, selects one of the content information that matches a predetermined condition, and outputs the network location information written in the selected content information; and
a browser section that performs acquisition and display of the location-dependent content indicated by specified network location information.

13. The content receiving apparatus according to claim 8, further comprising a browser section that performs acquisition and display of specified content, and
wherein the list content includes information necessary for generating content that can be displayed by a browser, and
the local region list content is content that indicates contents of the content information and also enables acquisition of the location-dependent content indicated by the network location information desired by a user.

14. A content distribution method comprising:
a meta-information content collecting step of collecting meta-information content from a server that has location-dependent content, which is content assigned correspondence to geographical location information, and the meta-information content including geographical location information indicating a geographical location of the location-dependent content and network location information that is a link destination of the location-dependent content;
a list content generation step of dividing a geographical distribution region of the location-dependent content into mesh-shaped areas based on the geographical location information of the meta-information content, generating a content information block in which the geographical location information is added to content information including the network location information as an index, collecting together the content information blocks for each area, generating an area information block in which area location information defining a location and shape of area is added thereto as an index, and generating list content having a structure in which the area information blocks are listed; and
a content distribution step of distributing the list content.

15. The content distribution method according to claim 14, wherein said list content generation step adds a mesh area definition stipulating a mesh division method of the distribution region, and the area location information is described by a mesh index number that can be calculated from the mesh area definition.

16. The content distribution method according to claim 14, wherein the geographical location information is information combining any of a content representative point indicating a geographical representative point relating to the location-dependent content, a content existing region indicating a geographical region relating to the location-dependent content, and a content distribution region indicating a geographical distribution range of the location-dependent content.

17. A content receiving method comprising:
a content receiving step of receiving list content that has a structure in which are collected together for each geographical area content information blocks to which geographical location information is added as an index to content information including network location information that is a link destination of location-dependent content that is content assigned correspondence to geographical location information indicating a geographical location, and area information blocks are listed in which area location information defining a location and shape of area has been added as an index thereto;
a location information acquisition step of acquiring point location information indicating a current point or search point; and
a content processing step of setting a content geographical search condition based on the point location information, and narrowing down the area information blocks subject to searching by comparing the search condition with the area definition information, and furthermore comparing the search condition with the geographical location information, thereby generating local region list content comprising a list of the content information that matches the search condition from the list content.

18. The content receiving method according to claim 17, wherein the list content has a mesh area definition that defines a method of dividing a geographical distribution region of the location-dependent content into a mesh shape,
the area location information is described by a mesh index number that can be calculated from the mesh area definition, and
said content processing step references the mesh area definition, narrows down the area information blocks subject to searching by finding the mesh index number of a mesh area that matches the search condition, and generates the local region list content from the list content by comparing the search condition with the geographical location information.

19. The content receiving method according to claim 18, wherein the search condition is a point of interest indicating a point in geographical space set based on the point location information, or a region of interest indicating a region in geographical space set based on the point location information.

20. The content receiving method according to claim 18, wherein the geographical location information is information combining any of a content representative point indicating a geographical representative point relating to the location-dependent content, a content existing region indicating a geographical region relating to the location-dependent content, and a content distribution region indicating a geographical distribution range of the location-dependent content.

21. A program that causes a computer to perform:
a meta-information content collecting step of collecting meta-information content from a server that has location-dependent content, which is content assigned correspondence to geographical location information, and the meta-information content including geographical location information indicating a geographical location of the location-dependent content and network location information that is a link destination of the location-dependent content;
a list content generation step of dividing a geographical distribution region of the location-dependent content into mesh-shaped areas based on the geographical location information of the meta-information content, generating a content information block in which the geographical location information is added to content information including the network location information as an index, collecting together the content information blocks for each area, generating an area information block in which area location information defining a location and shape of area is added thereto as an index, and generating list content having a structure wherein the area information blocks are listed; and
a content distribution step of distributing the list content.

22. A program that causes a computer to perform:
a content receiving step of receiving list content that has a structure in which are collected together for each geographical area content information blocks to which geographical location information is added as an index to content information including network location information that is a link destination of location-dependent content that is content assigned correspondence to geographical location information indicating a geographical location, and area information blocks are listed in which area location information defining a location and shape of area has been added as an index thereto;
a location information acquisition step of acquiring point location information indicating a current point or search point; and
a content processing step of setting a content geographical search condition based on the point location information, and narrowing down the area information blocks subject to searching by comparing the search condition with the area definition information, and furthermore comparing the search condition with the geographical location information, thereby generating local region list content comprising a list of the content information that matches the search condition from the list content.

23. The program according to claim 22, wherein the list content has a mesh area definition that defines a method of dividing a geographical distribution region of the location-dependent content into a mesh shape,
the area location information is described by a mesh index number that can be calculated from the mesh area definition, and
said content processing step references the mesh area definition, narrows down the area information blocks subject to searching by finding the mesh index number of a mesh area that matches the search condition, and generates the local region list content from the list content by comparing the search condition with the geographical location information.

24. A computer-readable recording medium that stores the program according to claim 21.
